(19) Europäisches Patentamt
European Patent Office
Office européen des brevets

(11) Publication number: 0 354 046
A2

(12) # EUROPEAN PATENT APPLICATION

(21) Application number: 89307923.6

(22) Date of filing: 03.08.89

(51) Int. Cl.[5]: A 01 N 43/40
//(A01N43/40,37:40)

(30) Priority: 05.08.88 GB 8818650
16.09.88 GB 8821716

(43) Date of publication of application:
07.02.90 Bulletin 90/06

(84) Designated Contracting States:
AT BE CH DE ES FR GB GR IT LI LU NL SE

(71) Applicant: MAY & BAKER LIMITED
Dagenham Essex RM10 7XS (GB)

(72) Inventor: Hewett, Richard Henry
c/o May & Baker Limited
Dagenham Essex RM10 7XS (GB)

Luscombe, Brian Malcolm
c/o May & Baker Limited
Dagenham Essex RM10 7XS (GB)

(74) Representative: Bentham, Stephen et al
J.A. Kemp & Co. 14 South Square Gray's Inn
London WC1R 5EU (GB)

(54) **Herbicidal method using bromoxynil.**

(57) A method of controlling the growth of weeds at a maize, wheat or barley crop locus, using (a) bromoxynil and (b) a 3-benzoylpiperidine 2,4-dione derivative and herbicidal compositions containing (a) and (b).

EP 0 354 046 A2

**Description**

## HERBICIDAL METHOD USING BROMOXYNIL

The present invention relates to a method for controlling the growth of weeds using certain 3-benzoylpiperidine-2,4-dione derivatives and bromoxynil, and to compositions for use in the method.

The present invention relates to a method for controlling the growth of weeds in maize, wheat and barley crops and to new herbicidal compositions comprising 3-benzoylpiperidine-2,4-dione derivatives of general formula I depicted hereinafter wherein either $R^1$ and $R^2$ both represent hydrogen atoms or both represent methyl groups, $R^3$ represents the nitro group and $R^4$ represents the chlorine atom or the trifluoromethyl group, or $R^3$ represents the chlorine atom or the nitro group and $R^4$ represents the methylsulphonyl group; and salts thereof with agriculturally acceptable bases [which are described amongst others in the specification of European Patent Publication No. 278742 as pre- and/or post emergence herbicides].

The compounds of general formula I are:

1. 3-(4-chloro-2-nitrobenzoyl)-6,6-dimethyl-piperidine-2, 4-dione
6. 3-(4-chloro-2-nitrobenzoyl)piperidine-2,4-dione
74. 3-(2-nitro-4-trifluoromethylbenzoyl)piperidine-2,4-dione
99. 3-(2-nitro-4-trifluoromethylbenzoyl)-6,6-dimethylpiperidine-2,4-dione
103. 3-(4-methylsulphonyl-2-nitrobenzoyl)-6,6-dimethylpiperidine-2,4-dione
110. 3-(4-methylsulphonyl-2-nitrobenzoyl)piperidine-2,4-dione
126. 3-(2-chloro-4-methylsulphonylbenzoyl)piperidine-2,4-dione
135. 3-(2-chloro-4-methylsulphonylbenzoyl)-6,6-dimethylpiperidine-2,4-dione

The numbers are assigned to the above compounds for identification and reference hereinafter, and correspond to the numbers assigned to those compounds in European Patent Publication No. 278742.

Bromoxynil [3,5-dibromo-4-hydroxybenzonitrile] is used for post-emergence weed control in maize, wheat and barley. Although giving control of a wide range of broad-leaf weeds, control of some important species for example Amaranthus retroflexus, Ipomoea purpurea and Side spinosa is unreliable. Owing to a lack of residual activity in the soil bromoxynil does not control the weeds which emerge after application. Bromoxynil has no useful activity against grass or sedge weeds.

It is to be understood that where in this specification reference is made to "bromoxynil" it is intended to refer, where the context so permits, to bromoxynil [3,5-dibromo-4-hydroxybenzonitrile] in the form of the parent phenol (acid equivalent), or an agriculturally acceptable salt or ester thereof, preferably a metal or amine salt or an ester thereof with an alkanoic acid containing from 2 to 10 carbon atoms; bromoxynil octanoate is preferred.

As a result of research and experimentation it has now been discovered that the use of certain 3-benzoylpiperidine-2,4-dione derivatives in combination with bromoxynil adds to its capabilities of controlling a wide spectrum of broad-leaf weeds, grasses and sedges by both foliar activity and residual soil activity.

In addition to this it has been found that the combined herbicidal activity of combinations of the 3-benzoylpiperidine-2,4-dione derivatives with bromoxynil against certain species is greater than expected when applied post-emergence (e.g. as a post-emergence spray) i.e. the herbicidal activity of combinations of the 3-benzoylpiperidine-2,4-dione derivatives with bromoxynil showed on unexpected degree of synergism (as defined either by P.M.L. Tammes, Netherlands Journal of Plant Pathology, 70 (1964), pp 73-80 in a paper entitled "Isoboles, a graphic representation of synergism in pesticides", or by L.E. Limpel et al., Proceedings of the North East Weed Control Conference, 16 (1962), pp 48-53 in a paper entitled "Weed Control by dimethyl tetrachloroterephthalate alone and in certain mixtures").

The remarkable synergistic effect of the mixture applied post-emergence gives improved reliability of weed control in maize, wheat and barley cultures and allows for a reduction in the amount of active ingredient employed.

Accordingly the present invention provides a method for the control of the growth of weeds at a maize, wheat or barley crop locus which comprises the post-emergence application to the locus of (a) bromoxynil or an agriculturally acceptable salt or ester thereof, preferably a metal or amine salt or an ester thereof with an alkanoic acid containing from 2 to 10 carbon atoms and (b) a 3-benzoylpiperidine-2,4-dione derivative of general formula I as hereinbefore defined or a salt thereof with an agriculturally acceptable base. Preferably the application rates of (a) and (b) are from 2 to 350 preferably from 150 to 350 (more preferably from 200 to 300)g a.e./ha and from 0.5 to 500 and preferably from 25 to 500 (more preferably 50 to 250)g acid equivalent/ha respectively in proportions of preferably 14:1 to 1:3.33 and more preferably 6:1 to 1:1.25 wt/wt of acid equivalent (a) to acid equivalent (b).

The method of the invention is used to control a broad spectrum of weed species in maize, wheat and barley crops by post-emergence application without significant permanent damage to the crop. The combined use described above provides both foliar and residual activity.

By the term 'post-emergence application' is meant application to the aerial or exposed portions of the weeds which have emerged above the surface of the soil. It will be appreciated that application according to the method may be from post-weed emergence pre-crop emergence to post-weed post-crop emergence. By the term 'foliar activity' is meant herbicidal activity produced by application to the aerial or exposed portions of the weeds which have emerged above the surface of the soil. By the term 'residual activity' is meant herbicidal

activity produced by application to the soil in which weed seeds or seedlings are present before emergence of the weeds above the surface of the soil, whereby seedlings present at the time of application or which germinate subsequent to application from seeds present in the soil, are controlled.

Weeds that may be controlled by the method include: from broad-leaf weeds, Abutilon theophrasti, Amaranthus retroflexus, Ambrosia trifida, Amsickia intermedia, Anthemis arvensis, Bidens pilosa, Brassica kaber, Chenopodium album, Ipomoea spp (e.g. I hederacea I. purpurea), Kochia scoparia, Matricaria spp. Polygonum spp. (e.g. P. aviculare, P. convolvulus, P. pennsylvanicum, P. persicaria, P. scabrum), Raphanus raphanistrum, Sesbania exaltata, Sida spinosa, Solanum spp. (e.g. S. elaeaguifolium, S. nigrum, S. nostratum, S. sarachoides), Sonchus oleraceus, Stellaria media, Thlaspi arvense, Xanthium pennsylvanicum, and from grass weeds, Brachiaria plantaginea, Digitaria spp (e.g. Digitaria horizonalis, Digitaria sanguinalis), Echinochloa crus-galli and Eleusine indica, and from sedges, Cyperus spp. (e.g. C. esculentus and C. rotundus).

In accordance with usual practice, a tank mix may be prepared prior to use by combining separate formulations of the individual herbicidal components, or separate formulations may be applied in a time-separated manner.

The following experiments illustrate the present invention by demonstrating the synergistic activity of bromoxynil and 3-benzoylpiperidine-2,4-dione derivatives.

## EXPERIMENT 1

Field experiment showing biological synergism between bromoxynil and 3-(4-chloro-2-nitrobenzoyl)-6,6-dimethylpiperidine-2,4-dione [Compound 1].

Duplicate $12m^2$ plots were sprayed post-emergence with 250g or 500g/ha Compound 1 (in a composition according to Example 1 as described hereinafter) or 250g a.e./ha bromoxynil (in a commercial emulsifiable concentrate formulation containing 225g/l w/v bromoxynil phenol equivalent as the octanoate ester) or a combination (as a tank mix) of the two herbicides in a volume of 300 litres/ha.

The following control figures were recorded on the grass weeds Brachiaria plantaginea (BRAPL), Digitaria horizontalis (DIGHO) and Eleusine indica (ELEIN) 29 days after application.

| Treatment | % control observed | | |
|---|---|---|---|
| | BRAPL | DIGHO | ELEIN |
| Bromoxynil 250g/ha | 0 | 0 | 0 |
| Compound 1 @ 250g/ha | 60 | 70 | 70 |
| Bromoxynil 250g/ha + Compound 1 @ 250g/ha | 85 | 85 | 85 |
| Compound 1 @ 500g/ha | 80 | 80 | 80 |
| Bromoxynil 250g/ha + Compound 1 @ 500g/ha | 90 | 95 | 93 |

The expected values (E) for the treatments employing the mixtures of bromoxynil and Compound 1 were calculated from the results obtained with the components applied separately (X and Y) using the formula of L.E. Limpel et al (1962)

$$E = X + Y - \frac{XY}{100}$$

where X and Y are percentage control of growth.

The following expected values were calculated

| Treatment | Expected % control | | |
|---|---|---|---|
| | BRAPL | DIGHO | ELEIN |
| Bromoxynil 250g/ha + Compound 1 @ 250g/ha | 60 | 70 | 70 |
| Bromoxynil 250g/ha + Compound 1 @ 500g/ha | 80 | 80 | 80 |

As these expected values are less than the values actually observed with mixtures there is a clear demonstration of synergism.

EXPERIMENT 2

Glasshouse experiment showing biological synergism between bromoxynil and 3-(2-nitro-4-trifluoromethylbenzoyl)-piperidine-2,4-dione [Compound 74].

A wide range of doses of bromoxynil i.e. 35, 70 and 140g a.e./ha (in a commercial emulsifiable concentrate formulation containing 225g/l bromoxynil phenol equivalent as the octanoate ester) and of Compound 74 i.e. 31, 63, 125 and 250g/ha (in a composition according to example 2 as described hereinafter) were applied at a spray volume of 290 litres/ha to triplicate 7.5cm square plastic plant pots of loam soil planted with 3 seedlings of Echinochloa crus-galli at the 3 leaf growth stage. Agricultural surfactant-nonylphenol ethylene oxide condensate containing 9 moles ethylene oxide was added to all spray dilutions to give 0.2% v/v concentration.

After spraying, the pots were arranged in randomised blocks in a glasshouse, watered as necessary, and assessed after 19 days for percentage phytotoxicity (reduction in green area compared with unsprayed plants) (0 = no effect; 100 = complete destruction). The mean results obtained for each treatment were as follows:

| | Application rate of Compound 74 g/ha | | | | |
|---|---|---|---|---|---|
| Application rate of bromoxynil | 0 | 31 | 63 | 125 | 250 |
| 0 | | 63 | 77 | 98 | 100 |
| 35 | 0 | 83 | 97 | 100 | 100 |
| 70 | 0 | 67 | 83 | 100 | 100 |
| 140 | 0 | 80 | 100 | 90 | 100 |

From these results the ED90 values (effective dose giving 90% phytotoxicity) in grams per hectare of Compound 74 were calculated for Compound 74 alone and with increasing rates of bromoxynil.

Bromoxynil applied alone was found to have no activity on Echinochloa crus-galli.

The ED90 values were as follows:

| | $ED_{90}$g/ha |
|---|---|
| Compound 74 alone | 82 |
| Compound 74 with 35g a.e./ha bromoxynil | 41 |
| Compound 74 with 70g a.e./ha bromoxynil | 64 |
| Compound 74 with 140g a.e./ha bromoxynil | 38 |

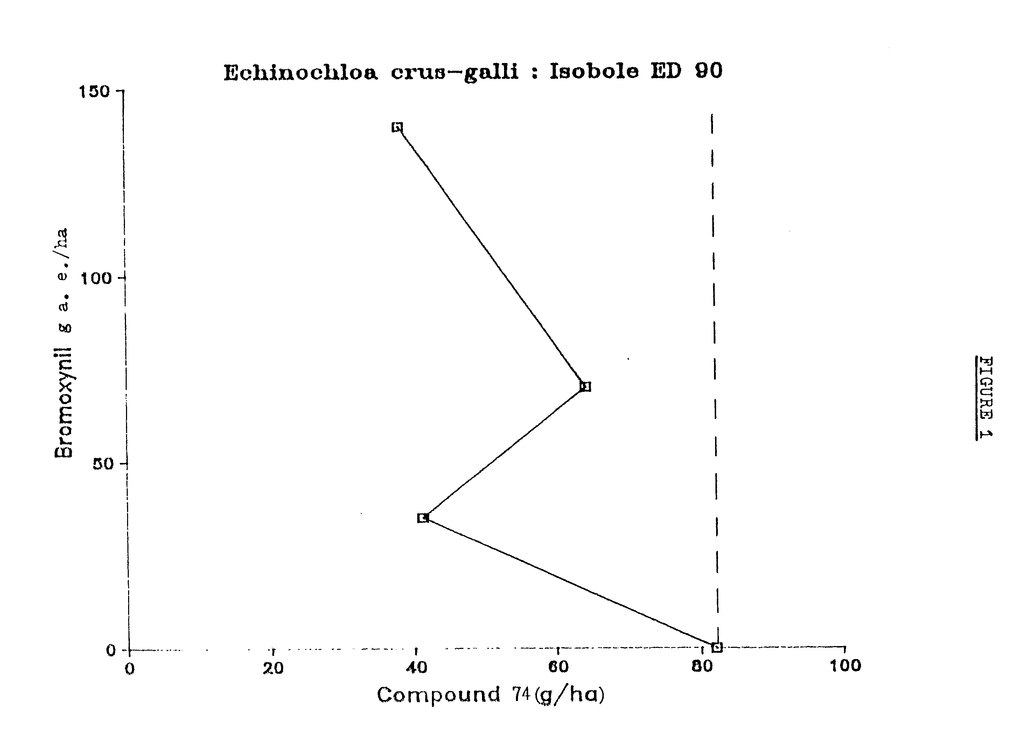

The results were then used to plot an isobole with a "one-sided effect" according to the methods of P.M.L. Tammes op.cit. The isobole produced, shown hereinafter in Figure 1 was clearly a type II curve (Tammes op.cit. page 74) characteristic of synergism.

EXPERIMENT 3

Glasshouse experiments showing biological synergism between bromoxynil and 3-benzoyl piperidine-2,4-dione derivatives on weed species.

A series of experiments was carried out to determine the nature of the biological interaction between bromoxynil and five compounds of general formula I on a range of weed species. The 3-benzoyl-piperidine-2,4-dione derivatives were compounds 1, 74, 99, 110 and 126. A wide range of dose rates of bromoxynil (in a commercial emulsifiable concentrate formulation containing 225g/l bromoxynil phenol equivalent as the octanoate ester) and of the 3-benzoylpiperidine-2,4-dione derivatives (in compositions according to examples 2-6 as described hereinafter) were applied in a spray volume of 290litres/ha to six replicate 7.5 cm square plastic plant pots of loam soil planted with seedlings of each of the target weed species. The dose rates of each component were selected according to the sensitivity of the weed species and are shown in the tables of results. The growth stages of the plants at spraying are also presented with the results. Agricultural surfactant (nonyl phenol ethylene oxide condensate containing 9 moles ethylene oxide marketed as 'Agral') was added to all spray dilutions to give 0.2% v/v concentration.

After spraying the pots were arranged in randomised blocks in a glasshouse and watered as necessary. After 19 days the fresh weight of vegetation in each pot was determined. The mean fresh weights were used to calculate the percentage inhibition of each species thus

$$100 \times \frac{\text{Mean wt in untreated pots - Mean wt in treated pots}}{\text{Mean weight in untreated pots.}}$$

Where possible the expected values E for treatments employing mixtures of piperidinedione and bromoxynil were calculated from the results obtained with the components applied alone (X and Y) using the formula of Limpel et al (1962).

$$E = X + Y - \frac{XY}{100}$$

where E, X and Y are percentage inhibition of growth.

In addition, the $ED_{50}$ or $ED_{90}$ values (the application rates giving 50% or 90% inhibition of growth, respectively) were calculated from the results for the piperidinedione alone and with increasing rates of bromoxynil. The ED values were then used to plot an isobole for each species according to the method of P.M.L. Tammes op cit. The results of percentage inhibition of growth, the ED values calculated from them and the calculated expected values are given in Tables 1-8.

The equation of Limpel could be applied to the data on 279 occasions. Of these, expected values were less than the values actually observed on 250 occasions (20 more than and 9 equal to). This overwhelmingly skewed distribution of responses is a clear demonstration of synergism.

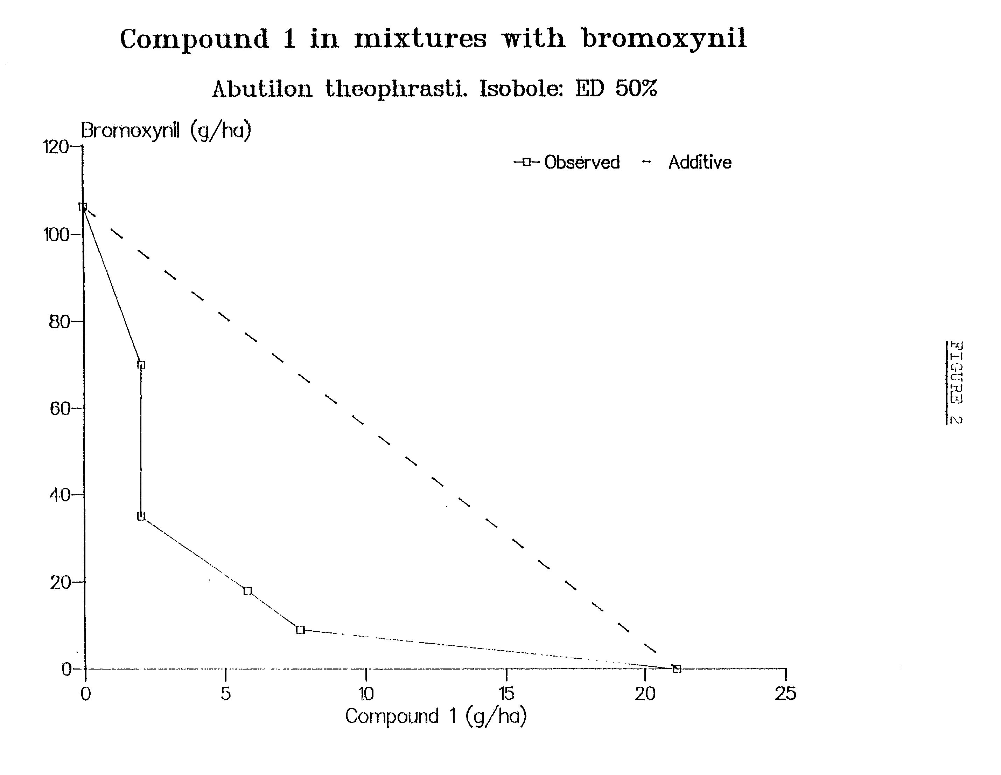

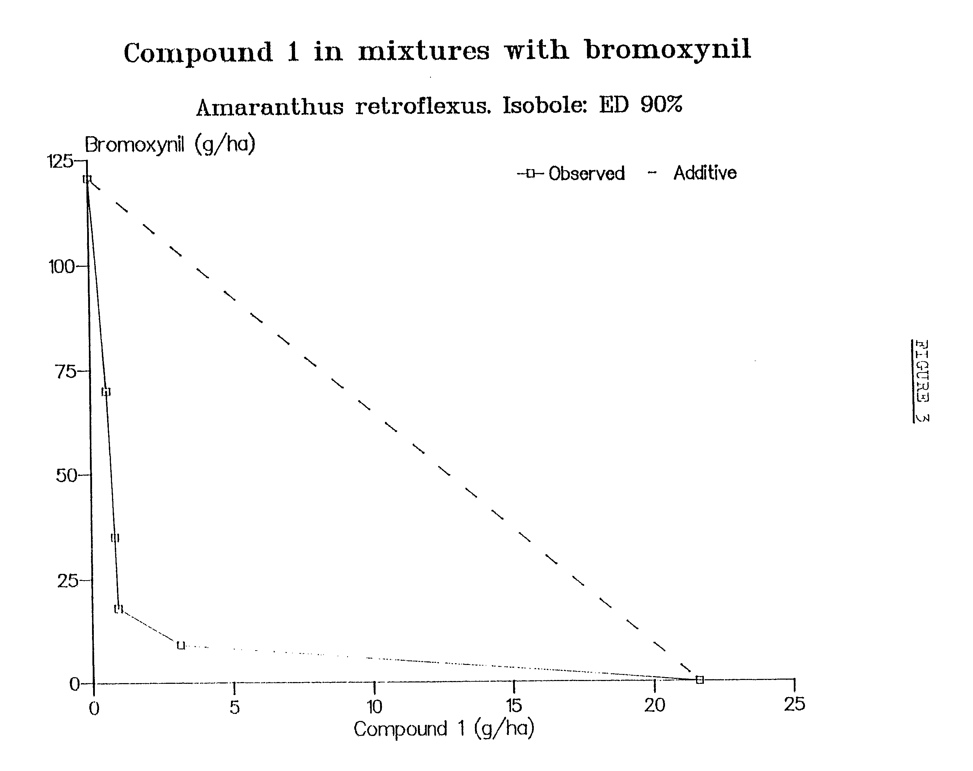

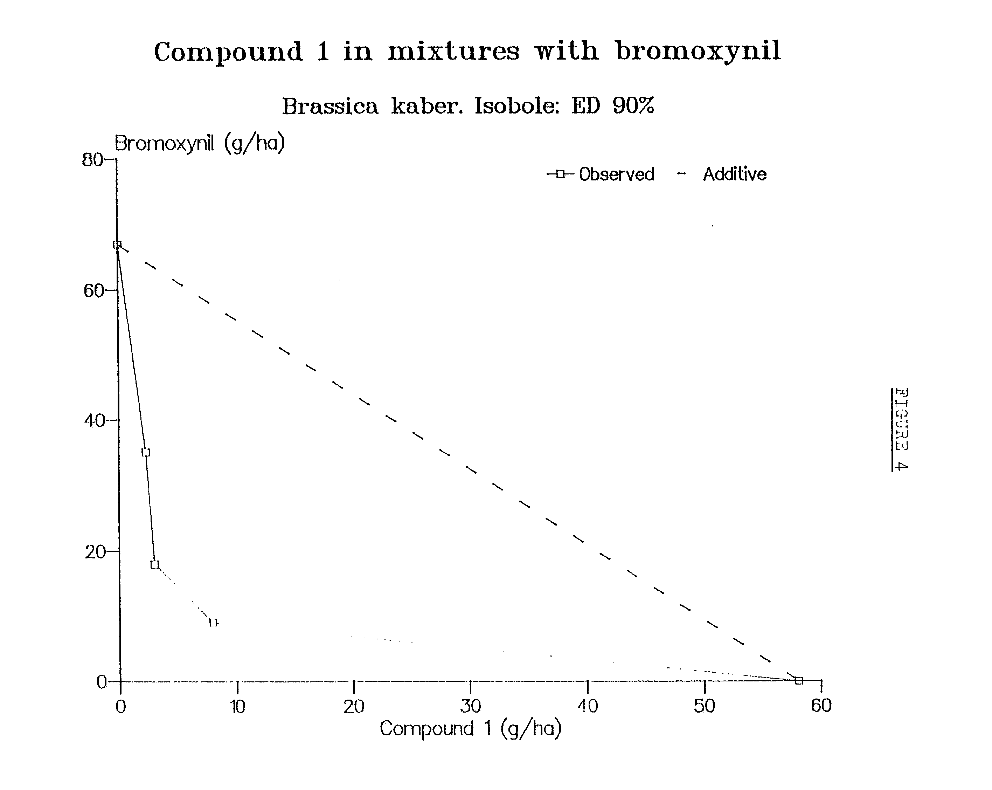

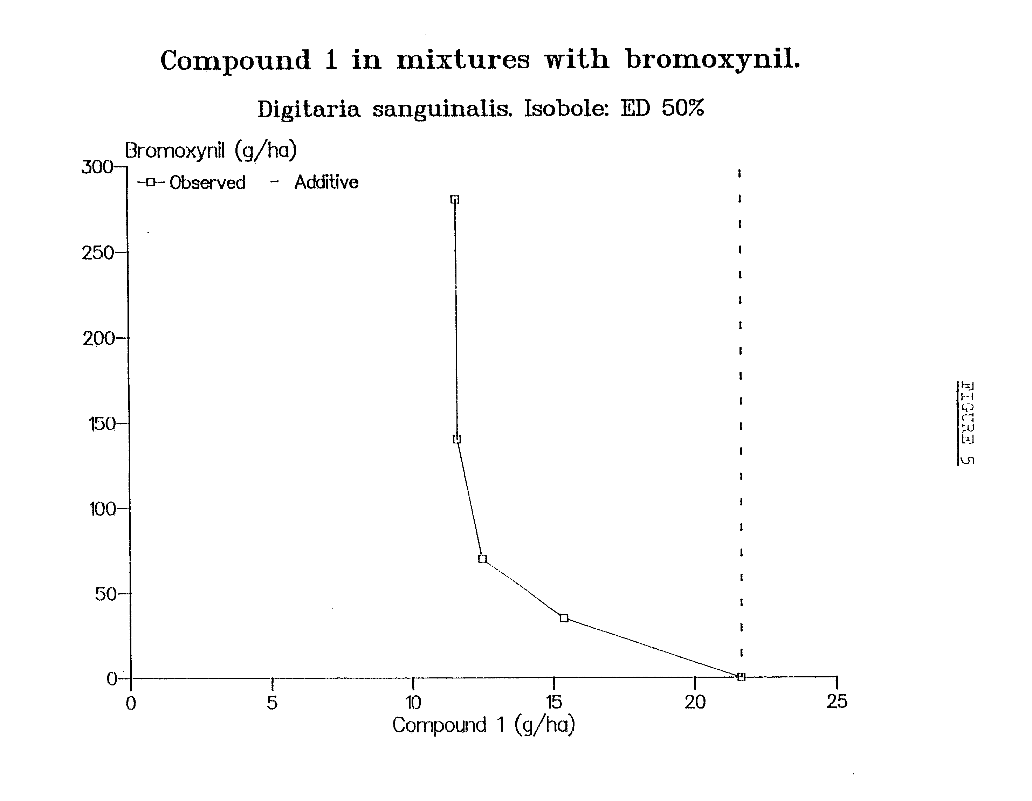

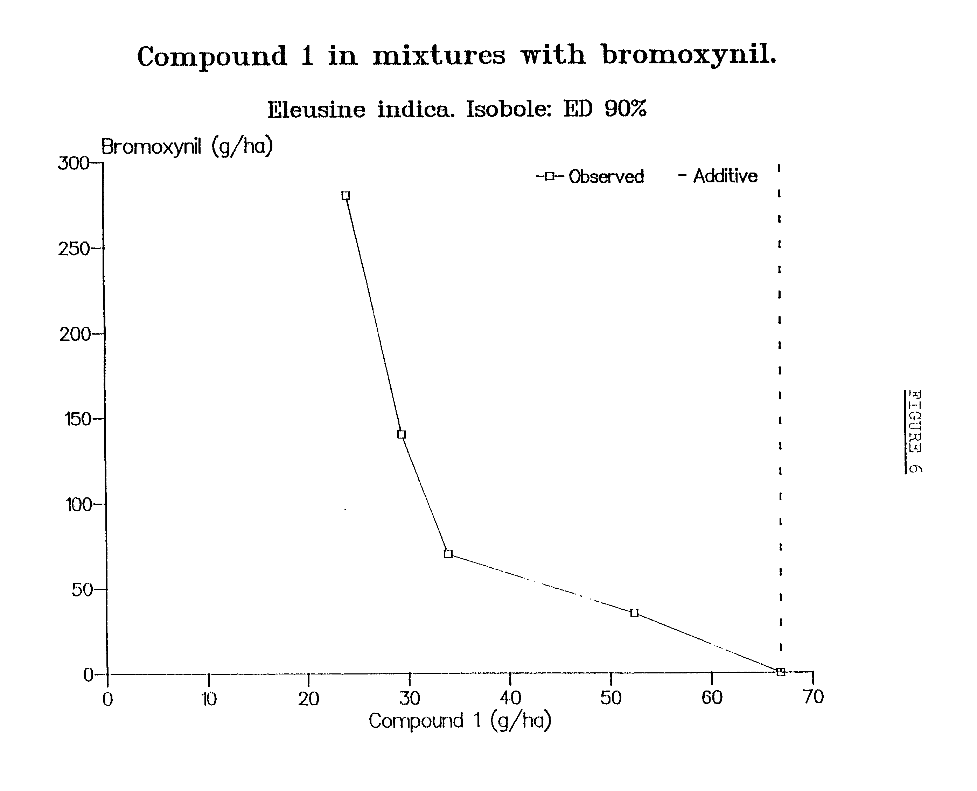

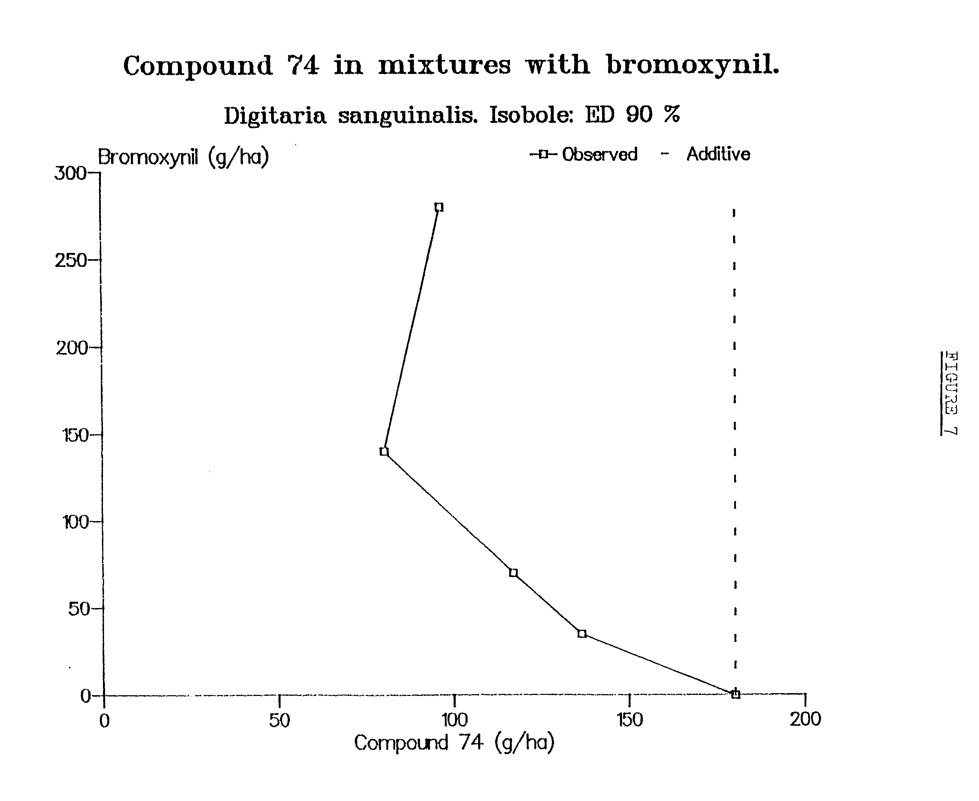

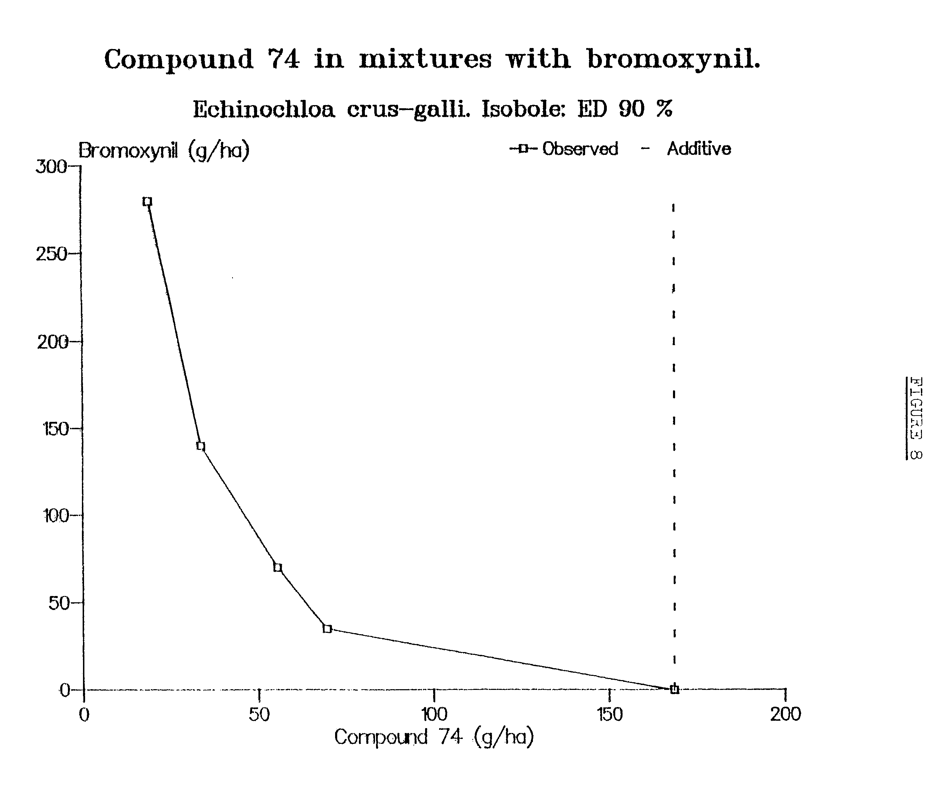

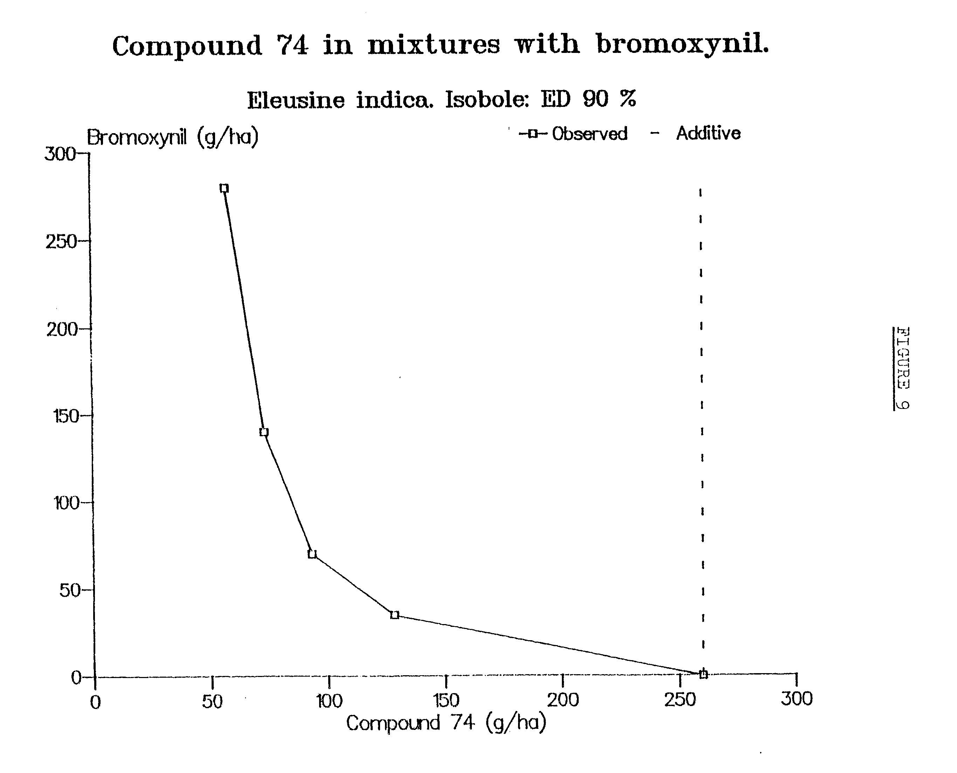

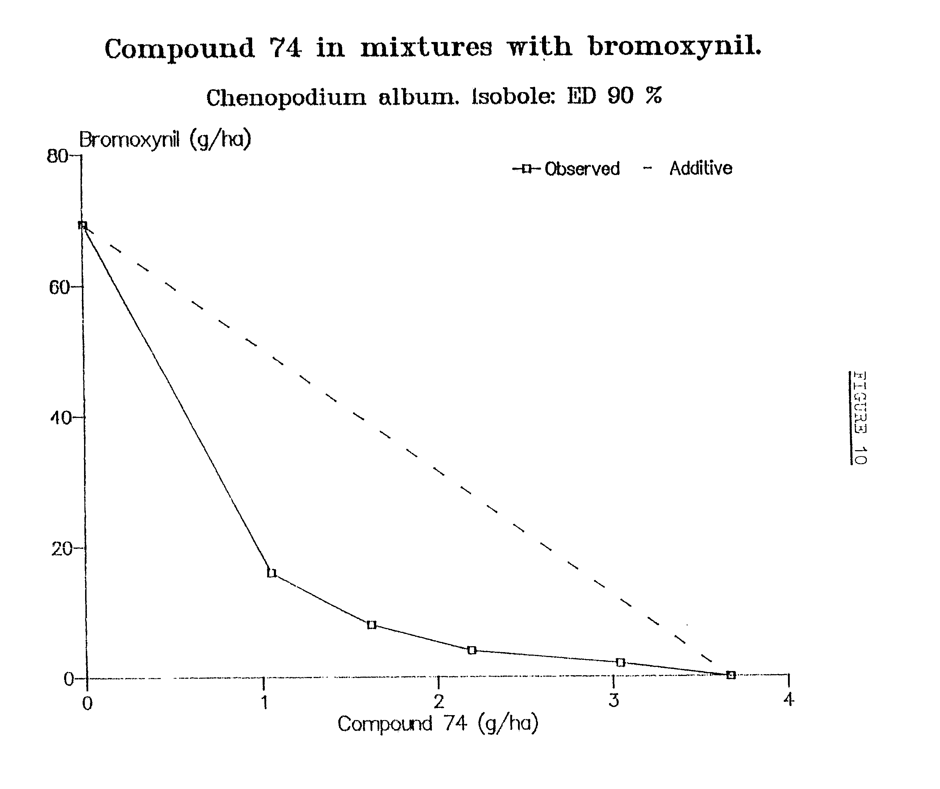

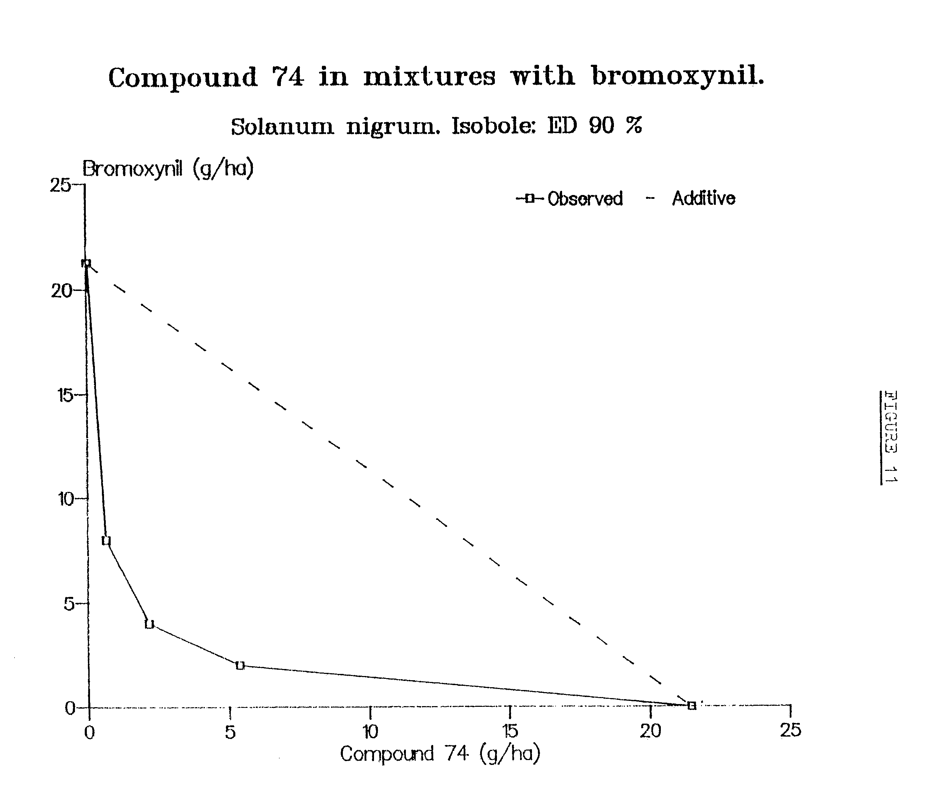

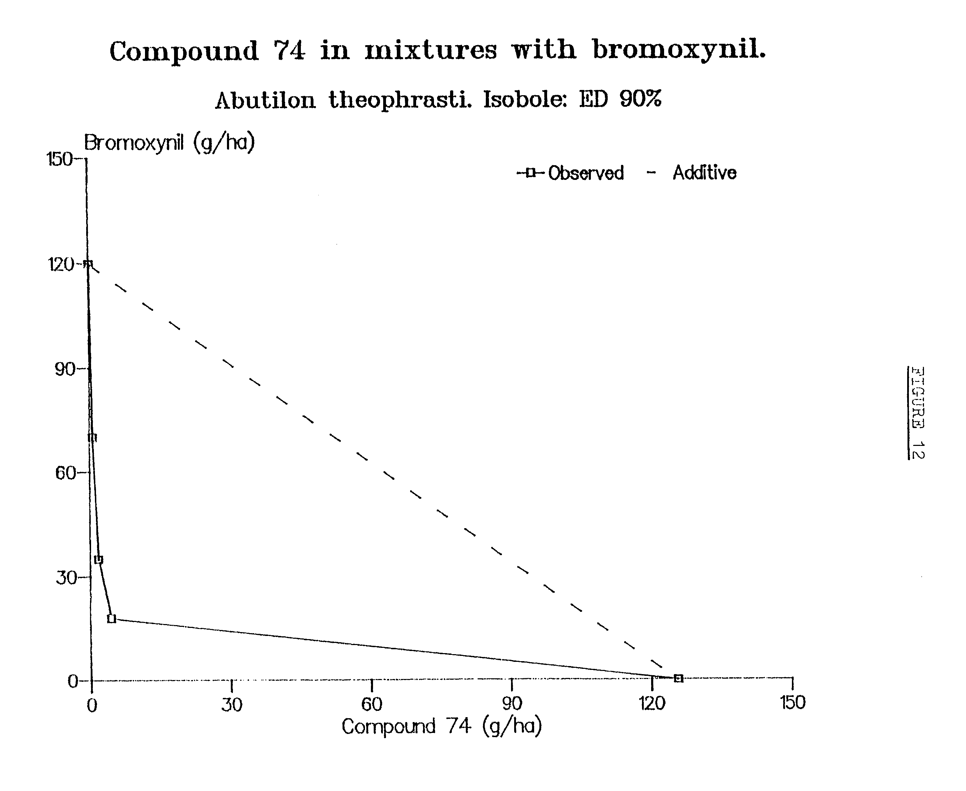

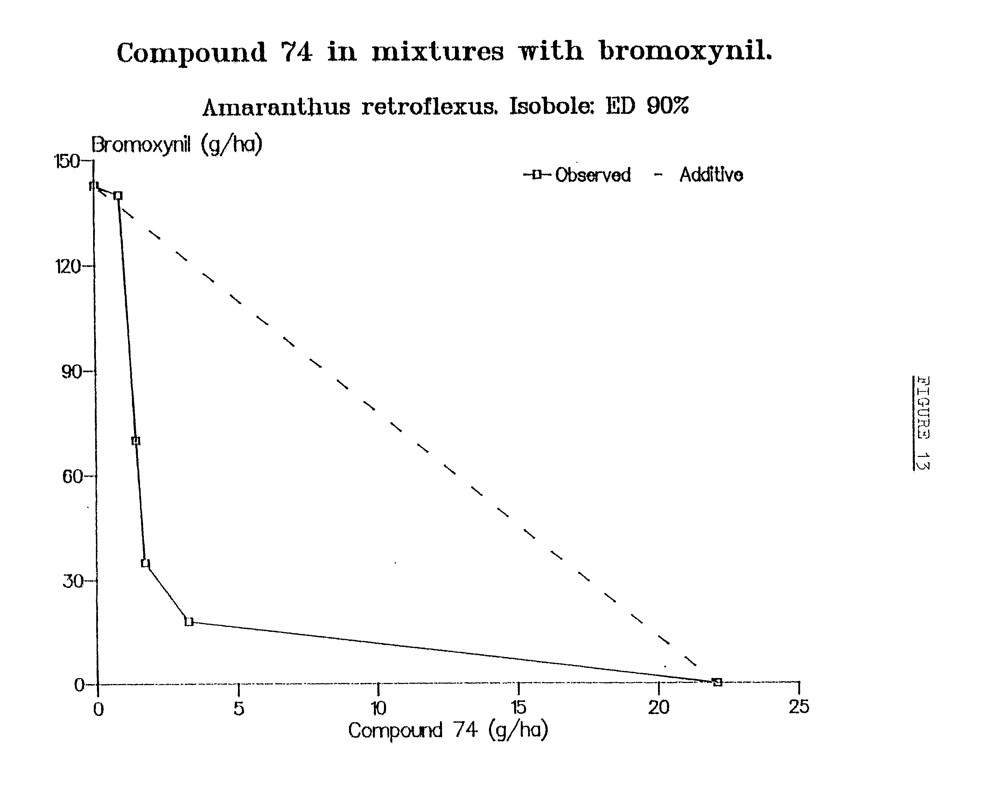

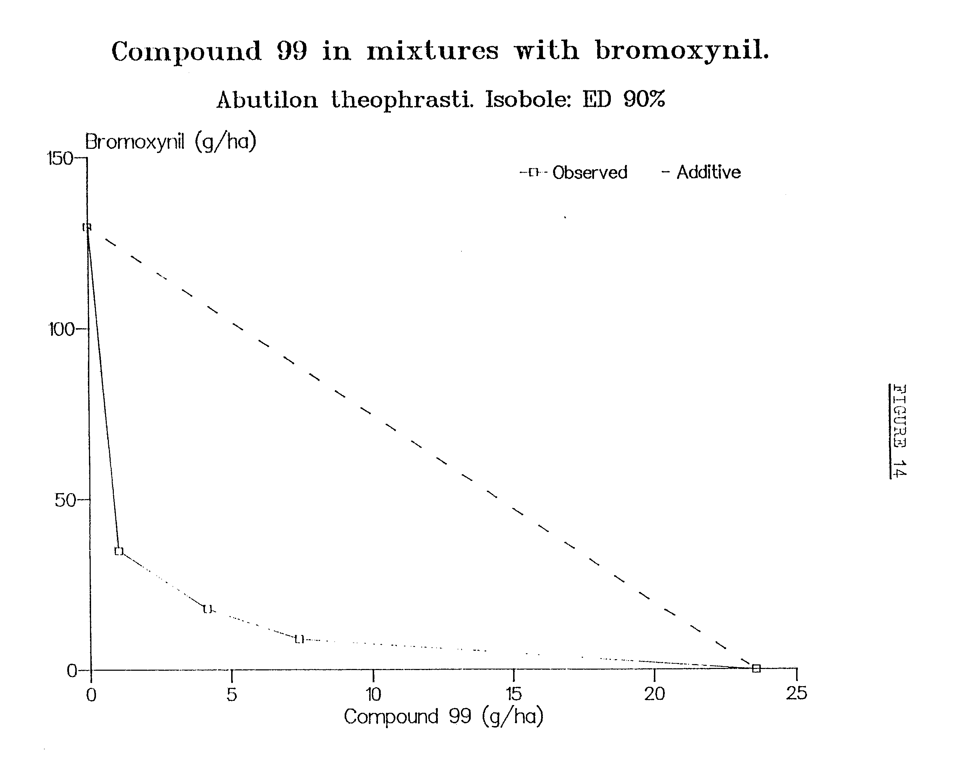

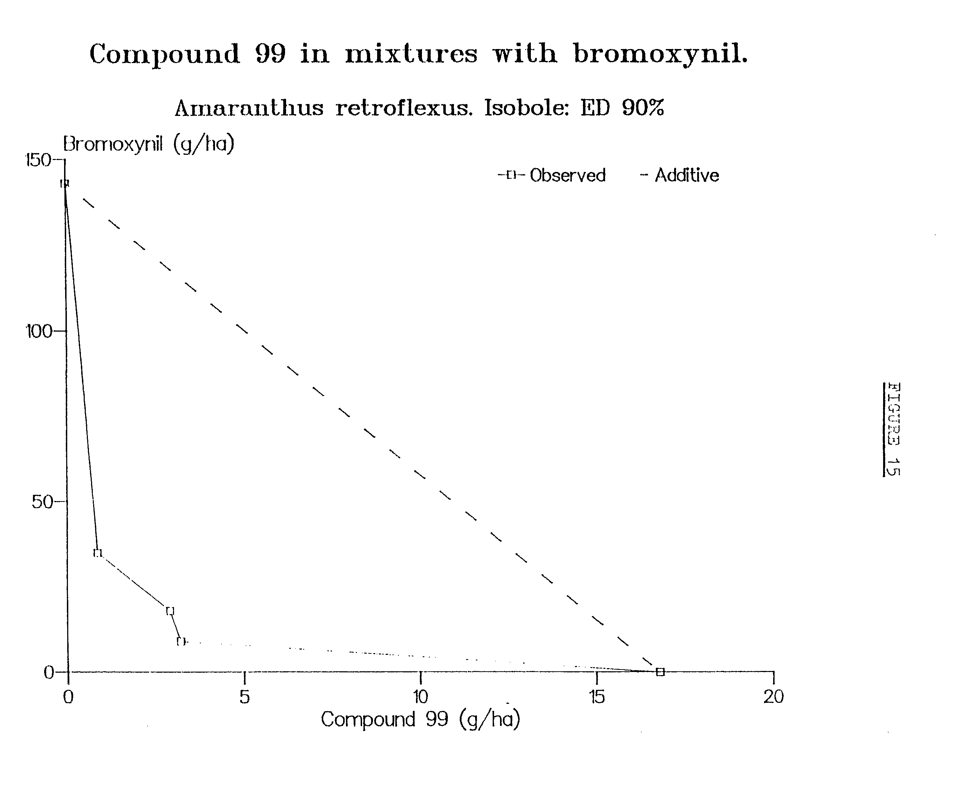

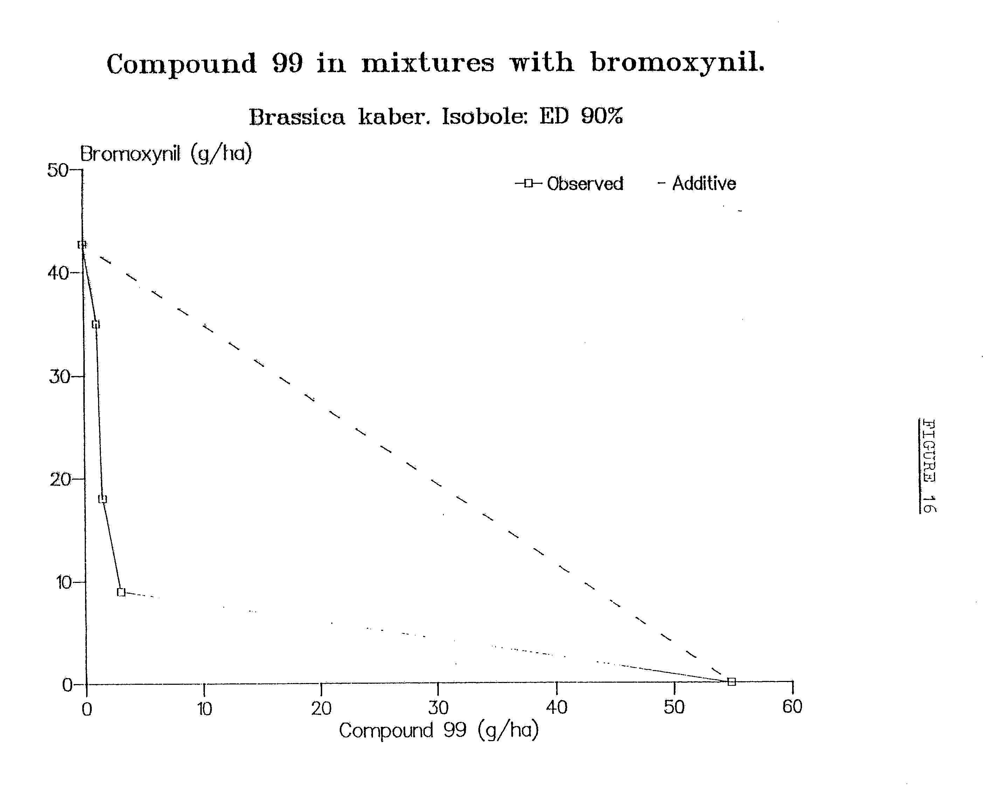

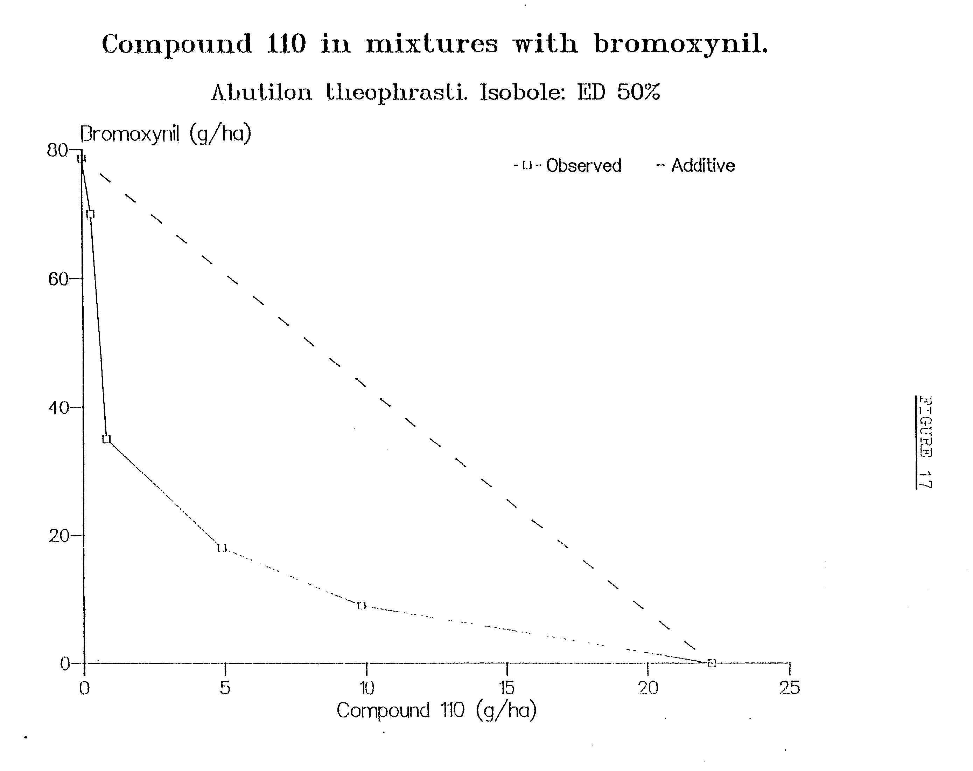

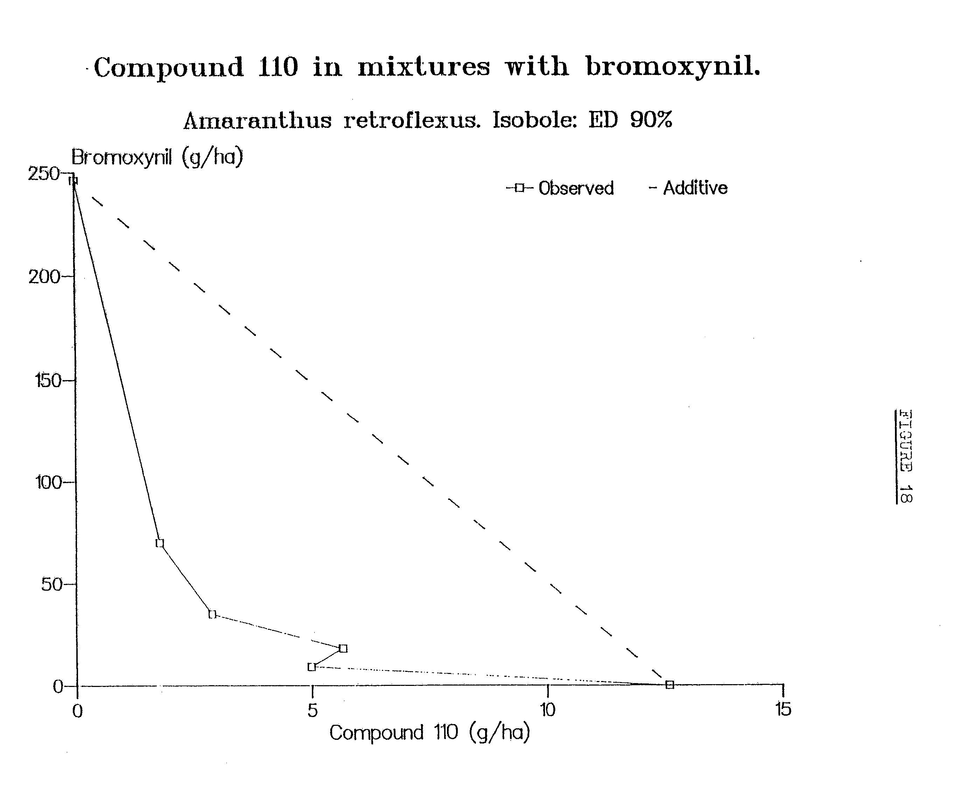

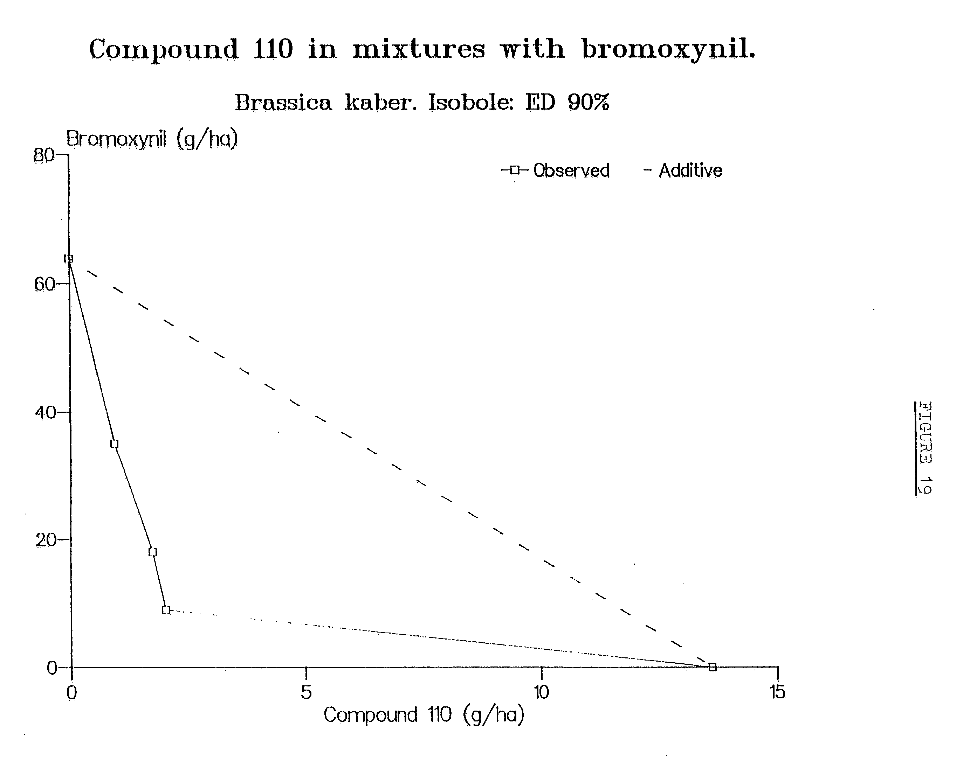

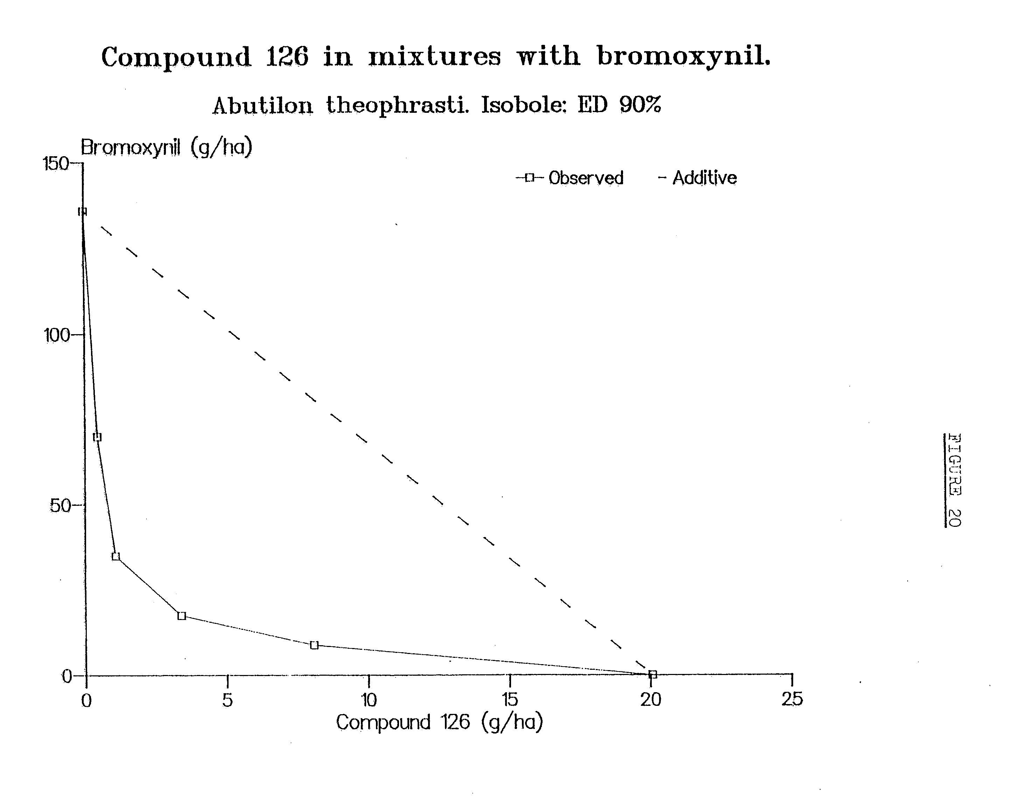

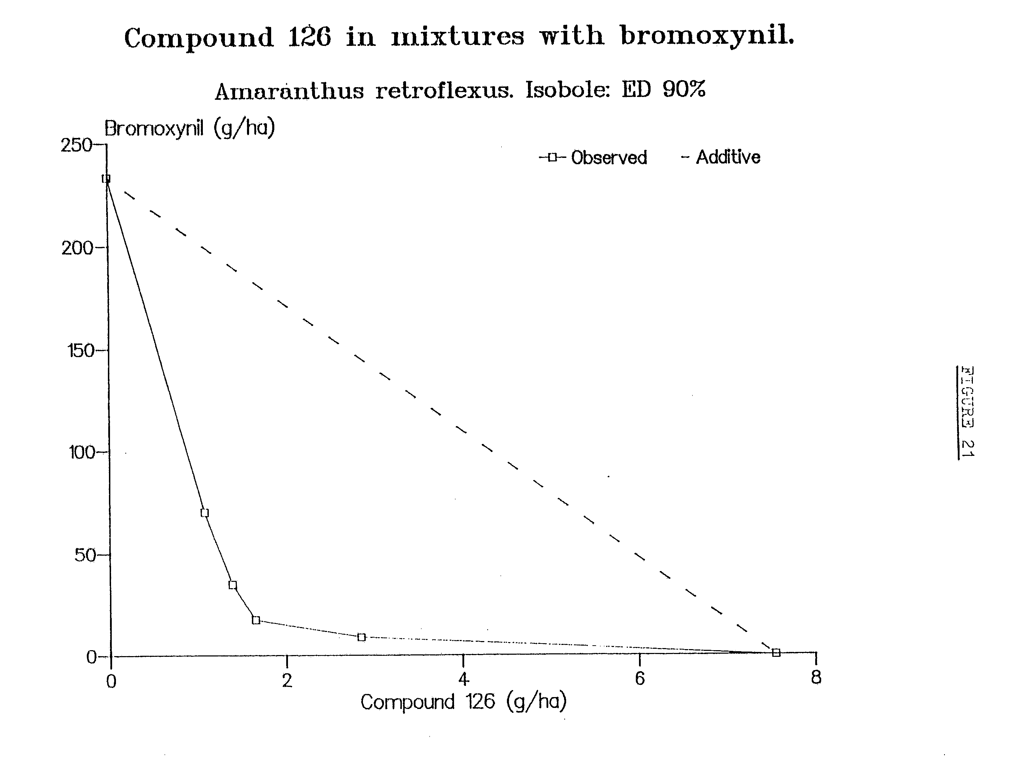

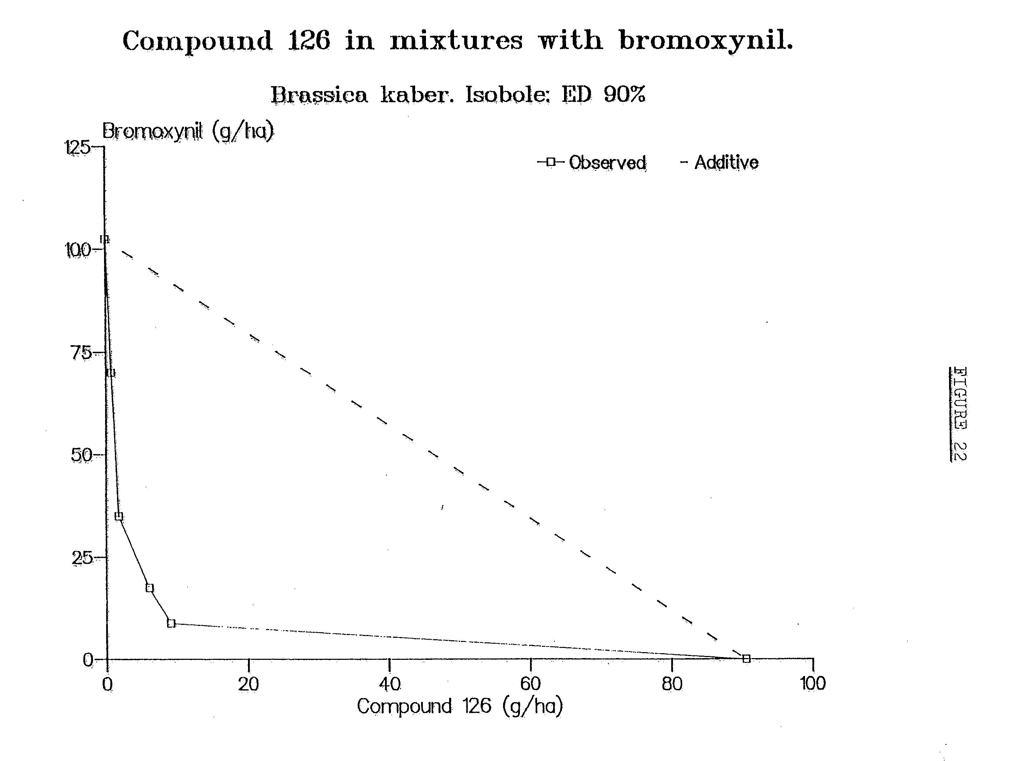

The isoboles produces shown hereinafter in Figures 2 - 22 are all clearly either type III curves for a 'two-sided effect' (Tammes op cit page 75) or type II curves for a 'one-sided effect' (Tammes op cit page 74) both characteristic of synergism, thereby confirming the interpretation of the Limpel equation.

EXPERIMENT 4

Glasshouse experiments showing the biological interaction between bromoxynil and 3-benzoyl piperidine-2,4-dione derivatives on maize var. Irla.

A series of experiments was carried out to determine the biological interaction between bromoxynil and two compounds of general formula I on maize. The 3-benzoyl piperidine-2,4-dione derivatives were compounds 74 and 99. A wide range of dose rates of bromoxynil (in a commercial emulsifiable concentrate formulation containing 225g/l bromoxynil phenol equivalent as the octanoate ester) and of the 3-benzoyl piperidine-2,4-dione derivatives (in compositions according to Examples 2 and 4 as described hereinafter) were applied in a spray volume of 290litres/ha to four replicate 10cm square plastic plant pots of loam soil containing one maize plant, the growth stages of which are given alongside the results. Agricultural surfactant ('Agral') was added to the spray dilutions to give 0.2%v/v concentration.

After spraying the pots were arranged in randomised blocks in a glasshouse and water as necessary. After 11 days the plants were assessed for percentage phytotoxicity (reduction in green area compared with unsprayed plants (0 = no effect 100 = complete destruction).

Where possible the expected values E for treatments employing mixtures of piperidinediones and bromoxynil were calculated from the results obtained with the components applied alone (X and Y) using the formula of Limpel et al (1962).

$$E = X + Y - \frac{XY}{100}$$

where E, X and Y are percentage phytotoxicity.

In addition the $ED_{20}$ values (the application rates giving 20% phytotoxicity) were calculated from the results for the piperidinedione alone and with increasing rates of bromoxynil. The ED values were then used to plot an isobole for each mixture according to the method of P.M.L. Tammes op cit. The results of percentage phytotoxicity, the $ED_{20}$ values calculated from them and the calculated expected value are given in Tables 9 and 10.

Although of the 40 occasions on which the equation of Limpel could be applied expected values were less than the values actually observed on 26 occasions the differences were very small (3% or less on 17 occasions) and did not result in the crop phytotoxicity becoming unacceptable. Consequently, it can be concluded that use of the mixture would not adversely affect the tolerance of maize.

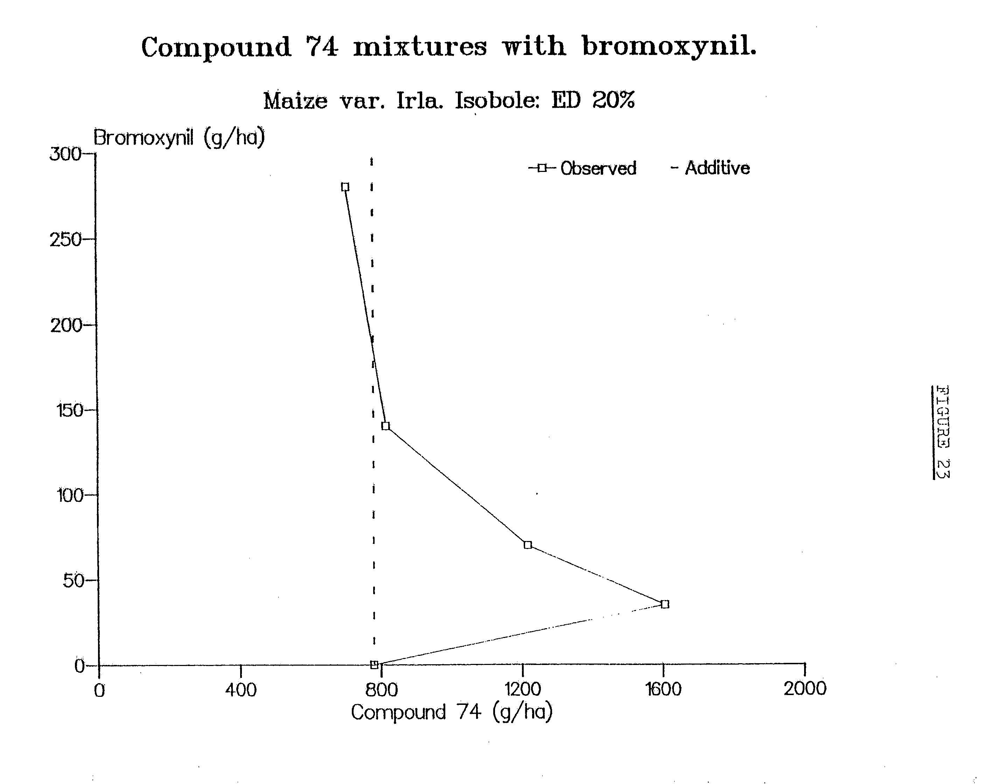

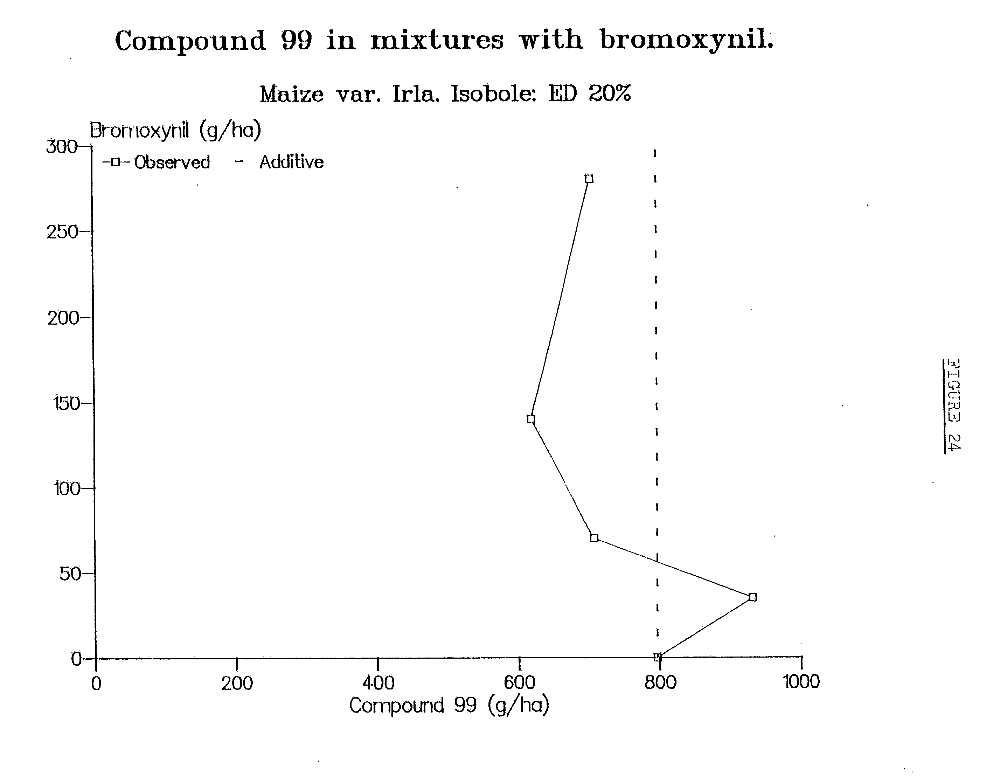

The isoboles produced shown hereinafter in Figures 23 and 24 indicate responses very near to type 1 curves (Tammes op cit Page 74) characteristic of an independent effect thereby confirming the interpretation of the Limpel equation.

Table 1

| Rate (g/ha) Compound 1 | Bromoxynil | Abutilon theophrasti 3 leaves | | % inhibition of growth Amaranthus retroflexus 2 leaves | | Brassica kaber 2-3 leaves | |
|---|---|---|---|---|---|---|---|
| 1 | 0 | | 0 | | 36 | | 20 |
| 2 | 0 | | 11 | | 25 | | 31 |
| 4 | 0 | | 26 | | 46 | | 35 |
| 8 | 0 | | 29 | | 66 | | 64 |
| 16 | 0 | | 48 | | 80 | | 61 |
| 31 | 0 | | 50 | | 92 | | 79 |
| 63 | 0 | | 63 | | 96 | | 94 |
| | | | $ED_{50}$(g/ha) 21.1 | | $ED_{90}$(g/ha) 21.6 | | $ED_{90}$(g/ha) 58.1 |
| 0 | 18 | | 0 | | 54 | | 61 |
| 0 | 35 | | 0 | | 34 | | 69 |
| 0 | 70 | | 37 | | 44 | | 97 |
| 0 | 140 | | 38 | | 89 | | 95 |
| 0 | 280 | | 100 | | 100 | | 100 |
| | | | $ED_{50}$(g/ha) 106.3 | | $ED_{90}$(g/ha) 120.3 | | $ED_{90}$(g/ha) 67.0 |
| 0.5 | 9 | 0 | - | 83 | - | 64 | - |
| 1 | 9 | 0 | - | 82 | - | 75 | - |
| 2 | 9 | 9 | - | 79 | - | 65 | - |
| 4 | 9 | 24 | - | 82 | - | 83 | - |
| 8 | 9 | 41 | - | 98 | - | 87 | - |
| 16 | 9 | 83 | - | 98 | - | 97 | - |
| 31 | 9 | 93 | - | 98 | - | 93 | - |
| | | $ED_{50}$(g/ha) 7.7 | NA | $ED_{90}$(g/ha) 3.1 | NA | $ED_{90}$(g/ha) 8.0 | NA |
| 0.5 | 18 | 0 | - | 79 | - | 72 | - |
| 1 | 18 | 0 | (0) | 96 | (71) | 76 | (69) |
| 2 | 18 | 0 | (11) | 94 | (65) | 80 | (73) |
| 4 | 18 | 32 | (26) | 100 | (75) | 96 | (75) |
| 8 | 18 | 64 | (29) | 94 | (84) | 92 | (86) |
| | | $ED_{50}$(g/ha) 5.8 | NA | $ED_{90}$(g/ha) 0.9 | NA | $ED_{90}$(g/ha) 3.0 | NA |
| 0.25 | 35 | 7 | - | 88 | - | 75 | - |
| 0.5 | 35 | 37 | - | 76 | - | 82 | - |
| 1 | 35 | 33 | (0) | 88 | (58) | 86 | (75) |
| 2 | 35 | 38 | (11) | 97 | (50) | 86 | (79) |
| 4 | 35 | 59 | (26) | 98 | (64) | 93 | (80) |
| | | $ED_{50}$(g/ha) 2.0 | NA | $ED_{90}$(g/ha) 0.8 | NA | $ED_{90}$(g/ha) 2.3 | NA |
| 0.25 | 70 | 7 | - | 83 | - | 96 | - |
| 0.5 | 70 | 0 | - | 88 | - | 92 | - |
| 1 | 70 | 14 | (37) | 96 | (64) | 92 | (98) |
| 2 | 70 | 69 | (44) | 95 | (58) | 100 | (98) |
| 4 | 70 | 67 | (54) | 100 | (70) | 99 | (98) |
| | | $ED_{50}$(g/ha) 2.0 | NA | $ED_{90}$(g/ha) 0.6 | NA | $ED_{90}$(g/ha) <0.25 | NA |

( ) Expected values by Limpel; - Not calculated; NA Not applicable.

Table 2

| Rate (g/ha) Compound 1 | Bromoxynil | % inhibition of growth | | | |
|---|---|---|---|---|---|
| | | Digitaria sanguinalis 3-4 leaves | | Eleusine indica 3-4 leaves | |
| 4 | 0 | | 6 | | 3 |
| 8 | 0 | | 17 | | 47 |
| 16 | 0 | | 47 | | 54 |
| 31 | 0 | | 71 | | 84 |
| 63 | 0 | | 78 | | 91 |
| 125 | 0 | | 87 | | 93 |
| | | | $ED_{50}$ (g/ha) 21.6 | | $ED_{90}$ (g/ha) 66.8 |
| 0 | 35 | | 8 | | 6 |
| 0 | 70 | | 0 | | 2 |
| 0 | 140 | | 13 | | 0 |
| 0 | 280 | | 6 | | 3 |
| | | | $ED_{50}$ (g/ha) ∞ | | $ED_{90}$ (g/ha) ∞ |
| 4 | 35 | 9 | (14) | 17 | (9) |
| 8 | 35 | 39 | (24) | 59 | (50) |
| 16 | 35 | 56 | (51) | 75 | (57) |
| 31 | 35 | 72 | (73) | 87 | (85) |
| 63 | 35 | 83 | (80) | 93 | (92) |
| 126 | 35 | 88 | (88) | 94 | (93) |
| | | $ED_{50}$(g/ha) 15.4 | NA | $ED_{90}$(g/ha) 52.4 | NA |
| 2 | 70 | 11 | - | 13 | - |
| 4 | 70 | 31 | (6) | 37 | (5) |
| 8 | 70 | 33 | (17) | 58 | (48) |
| 16 | 70 | 55 | (47) | 70 | (55) |
| 31 | 70 | 71 | (71) | 92 | (84) |
| 63 | 70 | 84 | (78) | 95 | (93) |
| | | $ED_{50}$(g/ha) 12.5 | NA | $ED_{90}$(g/ha) 33.9 | NA |
| 1 | 140 | 22 | - | 17 | - |
| 2 | 140 | 2 | - | 10 | - |
| 4 | 140 | 15 | (18) | 27 | (3) |
| 8 | 140 | 22 | (28) | 56 | (47) |
| 16 | 140 | 60 | (54) | 79 | (54) |
| 31 | 140 | 77 | (75) | 93 | (84) |
| 63 | 140 | 89 | (81) | 96 | (91) |
| | | $ED_{50}$(g/ha) 11.6 | NA | $ED_{90}$(g/ha) 29.4 | NA |
| 1 | 280 | 5 | - | 13 | - |
| 2 | 280 | 19 | - | 17 | - |
| 4 | 280 | 19 | (12) | 20 | (6) |
| 8 | 280 | 34 | (22) | 59 | (49) |
| 16 | 280 | 55 | (50) | 79 | (55) |
| 31 | 280 | 77 | (73) | 94 | (84) |
| | | $ED_{50}$(g/ha) 11.6 | NA | $ED_{90}$(g/ha) 24.1 | NA |

( ) Expected values by Limpel; - Not calculated; NA Not applicable.

Table 3

| Rate (g/ha) Compound 74 | Bromoxynil | % inhibition of growth | | | | | |
|---|---|---|---|---|---|---|---|
| | | Digitaria sanguinalis 3 leaves | | Echinochloa crus-galli 3 leaves | | Eleusine indica 3 leaves | |
| 16 | 0 | | 28 | | 13 | | 27 |
| 31 | 0 | | 49 | | 47 | | 33 |
| 63 | 0 | | 80 | | 79 | | 32 |
| 125 | 0 | | 88 | | 89 | | 78 |
| 250 | 0 | | 93 | | 95 | | 87 |
| 500 | 0 | | 96 | | 96 | | 97 |
| | | | $ED_{90}$(g/ha) 180.4 | | $ED_{90}$(g/ha) 168.6 | | $ED_{90}$(g/ha) 260.4 |
| 0 | 35 | | 1 | | 0 | | 0 |
| 0 | 70 | | 8 | | 27 | | 7 |
| 0 | 140 | | 0 | | 11 | | 0 |
| 0 | 280 | | 3 | | 32 | | 0 |
| | | | $ED_{90}$(g/ha) ∞ | | $ED_{90}$(g/ha) ∞ | | $ED_{90}$(g/ha) ∞ |
| 16 | 35 | 24 | (29) | 36 | (13) | 22 | (27) |
| 31 | 35 | 51 | (50) | 67 | (47) | 48 | (33) |
| 63 | 35 | 80 | (80) | 89 | (79) | 68 | (32) |
| 125 | 35 | 92 | (88) | 98 | (89) | 93 | (78) |
| 250 | 35 | 96 | (93) | 100 | (95) | 98 | (87) |
| 500 | 35 | 98 | (96) | 100 | (96) | 100 | (97) |
| | | $ED_{90}$ 136.6 | NA | $ED_{90}$ 69.73 | NA | $ED_{90}$ 128.61 | NA |
| 16 | 70 | 32 | (34) | 64 | (46) | 22 | (32) |
| 31 | 70 | 46 | (53) | 73 | (61) | 55 | (38) |
| 63 | 70 | 77 | (82) | 94 | (85) | 83 | (37) |
| 125 | 70 | 93 | (89) | 98 | (92) | 94 | (80) |
| 250 | 70 | 97 | (94) | 100 | (96) | 99 | (88) |
| | | $ED_{90}$ 117.08 | NA | $ED_{90}$ 55.54 | NA | $ED_{90}$ 93.6 | NA |
| 8 | 140 | 19 | - | 60 | - | 27 | - |
| 16 | 140 | 39 | (28) | 75 | (23) | 38 | (27) |
| 31 | 140 | 43 | (49) | 84 | (53) | 55 | (33) |
| 63 | 140 | 83 | (80) | 97 | (81) | 88 | (32) |
| 125 | 140 | 97 | (88) | 100 | (90) | 97 | (78) |
| | | $ED_{90}$ 80.36 | NA | $ED_{90}$ 33.82 | NA | $ED_{90}$ 73.24 | NA |
| 8 | 280 | 32 | - | 71 | - | 30 | - |
| 16 | 280 | 30 | (30) | 93 | (41) | 31 | (27) |
| 31 | 280 | 47 | (51) | 91 | (53) | 58 | (33) |
| 63 | 280 | 78 | (81) | 100 | (81) | 93 | (32) |
| 125 | 280 | 95 | (88) | 100 | (90) | 98 | (78) |
| | | $ED_{90}$ 96.48 | NA | $ED_{90}$ 19.04 | NA | $ED_{90}$ 57.47 | NA |

( ) Expected values by Limpel; - Not calculated; NA Not applicable.

Table 4

| Rate (g/ha) Compound 74 | Bromoxynil | % inhibition of growth | | | |
|---|---|---|---|---|---|
| | | Chenopodium album 2-6 leaves | | Solanum nigrum 2-3 leaves | |
| 2 | 0 | | 74 | | 13 |
| 4 | 0 | | 96 | | 38 |
| 8 | 0 | | 97 | | 52 |
| 16 | 0 | | 100 | | 82 |
| 31 | 0 | | 100 | | 96 |
| | | | $ED_{90}$(g/ha) 3.67 | | $ED_{90}$(g/ha) 21.45 |
| 0 | 2 | | 21 | | 26 |
| 0 | 4 | | 11 | | 18 |
| 0 | 8 | | 21 | | 50 |
| 0 | 16 | | 54 | | 91 |
| 0 | 31 | | 72 | | 91 |
| | | | $ED_{90}$(g/ha) 69.34 | | $ED_{90}$(g/ha) 21.27 |
| 1 | 2 | 63 | - | 39 | - |
| 2 | 2 | 82 | (79) | 64 | (36) |
| 4 | 2 | 95 | (97) | 93 | (54) |
| 8 | 2 | 99 | (98) | 93 | (64) |
| 16 | 2 | 100 | (100) | 98 | (87) |
| | | $ED_{90}$ 3.04 | NA | $ED_{90}$ 5.37 | NA |
| 0.5 | 4 | 30 | - | 44 | - |
| 1 | 4 | 72 | - | 81 | - |
| 2 | 4 | 93 | (77) | 88 | (29) |
| 4 | 4 | 98 | (96) | 97 | (49) |
| 8 | 4 | 100 | (97) | 99 | (61) |
| | | $ED_{90}$ 2.19 | NA | $ED_{90}$ 2.14 | NA |
| 0.25 | 8 | 44 | - | 74 | - |
| 0.5 | 8 | 54 | - | 92 | - |
| 1 | 8 | 86 | - | 94 | - |
| 2 | 8 | 95 | (79) | 98 | (56) |
| 4 | 8 | 96 | (97) | 98 | (69) |
| | | $ED_{90}$ 1.62 | NA | $ED_{90}$ 0.63 | NA |
| 0.25 | 16 | 56 | - | 98 | - |
| 0.5 | 16 | 70 | - | 100 | - |
| 1 | 16 | 92 | - | 97 | - |
| 2 | 16 | 98 | (88) | 100 | (92) |
| 4 | 16 | 98 | (98) | 100 | (94) |
| | | $ED_{90}$ 1.05 | NA | $ED_{90}$ $<0.25$ | NA |

( ) Expected values by Limpel; - Not calculated; NA Not applicable.

Table 5

| Rate (g/ha) Compound 74 | Bromoxynil | % inhibition of growth | | | |
|---|---|---|---|---|---|
| | | Abutilon theophrasti 1-2 leaves | | Amaranthus retroflexus 2 leaves | |
| 4 | 0 | | 55 | | 69 |
| 8 | 0 | | 46 | | 81 |
| 16 | 0 | | 63 | | 84 |
| 31 | 0 | | 75 | | 91 |
| 63 | 0 | | 83 | | 97 |
| | | | $ED_{90}$(g/ha) 125.6 | | $ED_{90}$(g/ha) 22.1 |
| 0 | 18 | | 29 | | 5 |
| 0 | 35 | | 39 | | 40 |
| 0 | 70 | | 60 | | 48 |
| 0 | 140 | | 94 | | 86 |
| 0 | 280 | | 100 | | 99 |
| | | | $ED_{90}$(g/ha) 119.9 | | $ED_{90}$(g/ha) 142.8 |
| 2 | 18 | 73 | - | 79 | - |
| 4 | 18 | 95 | (68) | 95 | (71) |
| 8 | 18 | 97 | (62) | 98 | (82) |
| 16 | 18 | 97 | (74) | 100 | (85) |
| 31 | 18 | 99 | (82) | 100 | (91) |
| | | $ED_{90}$ 4.38 | NA | $ED_{90}$ 3.24 | NA |
| 1 | 35 | 79 | - | 78 | - |
| 2 | 35 | 97 | - | 96 | - |
| 4 | 35 | 97 | (73) | 99 | (81) |
| 8 | 35 | 98 | (67) | 99 | (89) |
| 16 | 35 | 100 | (77) | 100 | (90) |
| | | $ED_{90}$ 1.72 | NA | $ED_{90}$ 1.69 | NA |
| 0.5 | 70 | 92 | - | 64 | - |
| 1 | 70 | 94 | - | 94 | - |
| 2 | 70 | 95 | - | 91 | - |
| 4 | 70 | 99 | (82) | 99 | (84) |
| 8 | 70 | 100 | (78) | 100 | (90) |
| | | $ED_{90}$ 0.53 | NA | $ED_{90}$ 1.39 | NA |
| 0.5 | 140 | 96 | - | 80 | - |
| 1 | 140 | 99 | - | 97 | - |
| 2 | 140 | 100 | - | 99 | - |
| 4 | 140 | 100 | (97) | 98 | (96) |
| 8 | 140 | 100 | (97) | 99 | (97) |
| | | $ED_{90}$ $<0.5$ | NA | $ED_{90}$ 0.84 | NA |

( ) Expected values by Limpel; - Not calculated; NA Not applicable.

Table 6

| Rate (g/ha) Compound 99 | Bromoxynil | % inhibition of growth | | | | | |
|---|---|---|---|---|---|---|---|
| | | Abutilon theophrasti 1-2 leaves | | Amaranthus retroflexus 2 leaves | | Brassica kaber 2 leaves | |
| 1 | 0 | | 41 | | 13 | | 23 |
| 2 | 0 | | 45 | | 44 | | 31 |
| 4 | 0 | | 46 | | 45 | | 58 |
| 8 | 0 | | 64 | | 77 | | 62 |
| 16 | 0 | | 80 | | 92 | | 60 |
| 31 | 0 | | 89 | | 94 | | 80 |
| 63 | 0 | | 96 | | 100 | | 93 |
| | | | $ED_{90}$(g/ha) 23.6 | | $ED_{90}$(g/ha) 16.8 | | $ED_{90}$(g/ha) 54.9 |
| 0 | 18 | | 6 | | 3 | | 49 |
| 0 | 35 | | 37 | | 40 | | 67 |
| 0 | 70 | | 51 | | 27 | | 100 |
| 0 | 140 | | 94 | | 89 | | 100 |
| 0 | 280 | | 100 | | 100 | | 100 |
| | | | $ED_{90}$(g/ha) 129.6 | | $ED_{90}$(g/ha) 142.9 | | $ED_{90}$(g/ha) 42.7 |
| 1 | 9 | 17 | - | 81 | - | 73 | - |
| 2 | 9 | 48 | - | 83 | - | 77 | - |
| 4 | 9 | 56 | - | 90 | - | 92 | - |
| 8 | 9 | 88 | - | 99 | - | 99 | - |
| 16 | 9 | 100 | - | 95 | - | 100 | - |
| 31 | 9 | 100 | - | 100 | - | 100 | - |
| | | $ED_{90}$(g/ha) 7.4 | NA | $ED_{90}$(g/ha) 3.2 | NA | $ED_{90}$(g/ha) 3.0 | NA |
| 1 | 18 | 59 | (45) | 75 | (16) | 79 | (61) |
| 2 | 18 | 81 | (48) | 88 | (46) | 94 | (65) |
| 4 | 18 | 90 | (49) | 85 | (47) | 100 | (79) |
| 8 | 18 | 96 | (66) | 99 | (78) | 98 | (81) |
| 16 | 18 | 98 | (81) | 99 | (92) | 99 | (80) |
| | | $ED_{90}$(g/ha) 4.2 | NA | $ED_{90}$(g/ha) 2.9 | NA | $ED_{90}$(g/ha) 1.5 | NA |
| 0.5 | 35 | 83 | - | 82 | - | 87 | - |
| 1 | 35 | 86 | (63) | 80 | (48) | 95 | (75) |
| 2 | 35 | 96 | (65) | 97 | (66) | 92 | (77) |
| 4 | 35 | 99 | (66) | 100 | (67) | 96 | (86) |
| 8 | 35 | 99 | (77) | 97 | (86) | 94 | (87) |
| | | $ED_{90}$(g/ha) 1.0 | NA | $ED_{90}$(g/ha) 0.9 | NA | $ED_{90}$(g/ha) 1.1 | NA |
| 0.25 | 70 | 96 | - | 96 | - | 92 | - |
| 0.5 | 70 | 97 | - | 88 | - | 98 | - |
| 1 | 70 | 98 | (71) | 98 | (46) | 97 | (100) |
| 2 | 70 | 91 | (73) | 95 | (59) | 91 | (100) |
| 4 | 70 | 100 | (74) | 98 | (60) | 100 | (100) |
| | | $ED_{90}$(g/ha) $<0.25$ | NA | $ED_{90}$(g/ha) $<0.25$ | NA | $ED_{90}$(g/ha) $<0.25$ | NA |

( ) Expected values by Limpel; - Not calculated; NA Not applicable.

Table 7

| Rate (g/ha) Compound 110 | Bromoxynil | % inhibition of growth | | | | | |
|---|---|---|---|---|---|---|---|
| | | Abutilon theophrasti 1-2 leaves | | Amaranthus retroflexus 2 leaves | | Brassica kaber 2 leaves | |
| 1 | 0 | 6 | | 9 | | 0 | |
| 2 | 0 | 12 | | 14 | | 22 | |
| 4 | 0 | 19 | | 51 | | 65 | |
| 8 | 0 | 20 | | 69 | | 78 | |
| 16 | 0 | 51 | | 95 | | 95 | |
| 31 | 0 | 35 | | 100 | | 99 | |
| 63 | 0 | 77 | | 100 | | 100 | |
| | | $ED_{50}$(g/ha) 22.3 | | $ED_{90}$(g/ha) 12.6 | | $ED_{90}$(g/ha) 13.6 | |
| 0 | 18 | 0 | | 0 | | 32 | |
| 0 | 35 | 9 | | 38 | | 69 | |
| 0 | 70 | 26 | | 17 | | 92 | |
| 0 | 140 | 84 | | 45 | | 100 | |
| 0 | 280 | 100 | | 92 | | 100 | |
| | | $ED_{50}$(g/ha) 78.6 | | $ED_{90}$(g/ha) 246.2 | | $ED_{90}$(g/ha) 63.9 | |
| 2 | 9 | 12 | - | 25 | - | 89 | - |
| 4 | 9 | 27 | - | 72 | - | 97 | - |
| 8 | 9 | 49 | - | 100 | - | 100 | - |
| 16 | 9 | 58 | - | 100 | - | 100 | - |
| 31 | 9 | 79 | - | 100 | - | 100 | - |
| | | $ED_{50}$(g/ha) 9.8 | | $ED_{90}$(g/ha) 5.0 | NA | $ED_{90}$(g/ha) 2.0 | NA |
| 1 | 18 | 0 | (6) | 36 | (9) | 71 | (32) |
| 2 | 18 | 21 | (12) | 57 | (14) | 92 | (47) |
| 4 | 18 | 36 | (19) | 84 | (51) | 100 | (76) |
| 8 | 18 | 74 | (20) | 93 | (69) | 99 | (85) |
| 16 | 18 | 91 | (51) | 100 | (95) | 99 | (97) |
| | | $ED_{50}$(g/ha) 4.9 | | $ED_{90}$(g/ha) 5.7 | NA | $ED_{90}$(g/ha) 1.7 | NA |
| 0.5 | 35 | 28 | - | 30 | - | 96 | - |
| 1 | 35 | 69 | (14) | 50 | (44) | 85 | (69) |
| 2 | 35 | 76 | (20) | 77 | (47) | 95 | (76) |
| 4 | 35 | 92 | (26) | 96 | (70) | 100 | (89) |
| 8 | 35 | 100 | (27) | 100 | (81) | 96 | (93) |
| | | $ED_{50}$(g/ha) 0.8 | | $ED_{90}$(g/ha) 2.9 | NA | $ED_{90}$(g/ha) 0.9 | NA |
| 0.25 | 70 | 51 | - | 52 | - | 96 | - |
| 0.5 | 70 | 71 | - | 46 | - | 95 | - |
| 1 | 70 | 73 | (30) | 54 | (24) | 100 | (92) |
| 2 | 70 | 98 | (35) | 81 | (29) | 96 | (94) |
| 4 | 70 | 98 | (40) | 100 | (59) | 100 | (97) |
| | | $ED_{50}$(g/ha) 0.3 | | $ED_{90}$(g/ha) 1.8 | NA | $ED_{90}$(g/ha) $<0.3$ | NA |

( ) Expected value by Limpel; - Not calculated; NA Not applicable.

Table 8

| Rate (g/ha) Compound 126 | Bromoxynil | % inhibition of growth | | | | | |
|---|---|---|---|---|---|---|---|
| | | Abutilon theophrasti 1-2 leaves | | Amaranthus retroflexus 2-4 leaves | | Brassica kaber 2-3 leaves | |
| 1 | 0 | 0 | | 0 | | 0 | |
| 2 | 0 | 38 | | 50 | | 0 | |
| 4 | 0 | 56 | | 91 | | 0 | |
| 8 | 0 | 68 | | 91 | | 17 | |
| 16 | 0 | 88 | | 99 | | 26 | |
| 31 | 0 | 94 | | 100 | | 48 | |
| 63 | 0 | 96 | | 100 | | 80 | |
| | | ED50(g/ha) 20.1 | | ED90(g/ha) 7.6 | | ED90(g/ha) 90.6 | |
| 0 | 18 | 0 | | 0 | | 30 | |
| 0 | 35 | 13 | | 4 | | 55 | |
| 0 | 70 | 44 | | 8 | | 82 | |
| 0 | 140 | 96 | | 84 | | 97 | |
| 0 | 280 | 99 | | 90 | | 98 | |
| | | ED50(g/ha) 135.7 | | ED90(g/ha) 233.3 | | ED90(g/ha) 102.4 | |
| 1 | 9 | 14 | - | 4 | - | 12 | - |
| 2 | 9 | 42 | - | 86 | - | 41 | - |
| 4 | 9 | 80 | - | 92 | - | 72 | - |
| 8 | 9 | 90 | - | 99 | - | 95 | - |
| 16 | 9 | 98 | - | 100 | - | 96 | - |
| 32 | 9 | 100 | - | 100 | - | 98 | - |
| | | ED50(g/ha) 8.1 | NA | ED90 2.9 | NA | ED90(g/ha) 9.0 | NA |
| 1 | 18 | 40 | (0) | 70 | (0) | 43 | (30) |
| 2 | 18 | 80 | (38) | 95 | (50) | 75 | (30) |
| 4 | 18 | 89 | (56) | 100 | (91) | 91 | (30) |
| 8 | 18 | 100 | (68) | 100 | (91) | 87 | (42) |
| 16 | 18 | 100 | (88) | 100 | (99) | 97 | (48) |
| | | ED50(g/ha) 3.4 | NA | ED90 1.7 | NA | ED90(g/ha) 6.0 | NA |
| 0.5 | 35 | 42 | - | 47 | - | 54 | - |
| 1 | 35 | 89 | (13) | 79 | (4) | 71 | (55) |
| 2 | 35 | 100 | (46) | 98 | (52) | 95 | (55) |
| 4 | 35 | 97 | (62) | 100 | (91) | 98 | (55) |
| 8 | 35 | 99 | (72) | 100 | (91) | 100 | (63) |
| | | ED50(g/ha) 1.1 | NA | ED90 1.4 | NA | ED90(g/ha) 1.8 | NA |
| 0.25 | 70 | 84 | - | 15 | - | 57 | - |
| 0.5 | 70 | 89 | - | 68 | - | 95 | - |
| 1 | 70 | 96 | (65) | 95 | (8) | 90 | (82) |
| 2 | 70 | 100 | (75) | 99 | (54) | 97 | (82) |
| 4 | 70 | 100 | (82) | 100 | (92) | 100 | (82) |
| | | ED50(g/ha) 0.4 | NA | ED90 1.1 | NA | ED90(g/ha) 0.8 | NA |

( ) Expected value by Limpel; - Not calculated; NA Not applicable.

Table 9

| Rate (g/ha) Compound 74 | Bromoxynil | % crop phytotoxicity | |
|---|---|---|---|
| | | Maize (3-4 leaves) | |
| 63 | 0 | 0 | |
| 125 | 0 | 0 | |
| 250 | 0 | 3 | |
| 500 | 0 | 6 | |
| 1000 | 0 | 17 | |
| 2000 | 0 | 63 | |
| | | $ED_{20}$(g/ha) 780 | |
| 0 | 35 | 0 | |
| 0 | 70 | 0 | |
| 0 | 140 | 0 | |
| 0 | 280 | 0 | |
| | | $ED_{20}$(g/ha) >280 | |
| 31 | 35 | 0 | - |
| 63 | 35 | 0 | (0) |
| 125 | 35 | 0 | (0) |
| 250 | 35 | 3 | (3) |
| 500 | 35 | 9 | (6) |
| 1000 | 35 | 10 | (17) |
| | | $ED_{20}$(g/ha) 1605 | NA |
| 31 | 70 | 1 | - |
| 63 | 70 | 0 | (0) |
| 125 | 70 | 1 | (0) |
| 250 | 70 | 4 | (3) |
| 500 | 70 | 8 | (6) |
| 1000 | 70 | 18 | (17) |
| | | $ED_{20}$(g/ha) 1217 | NA |
| 31 | 140 | 0 | - |
| 63 | 140 | 1 | (0) |
| 125 | 140 | 3 | (0) |
| 250 | 140 | 9 | (3) |
| 500 | 140 | 18 | (6) |
| 1000 | 140 | 13 | (17) |
| | | $ED_{20}$(g/ha) 815 | NA |
| 31 | 280 | 1 | - |
| 63 | 280 | 3 | (0) |
| 125 | 280 | 2 | (0) |
| 250 | 280 | 2 | (3) |
| 500 | 280 | 7 | (6) |
| 1000 | 280 | 30 | (17) |
| | | $ED_{20}$(g/ha) 706 | NA |

( ) Expected value by Limpel; - Not calculated;

NA Not applicable.

Table 10

| Rate (g/ha) Compound 99 | Bromoxynil | % crop phytotoxicity | |
|---|---|---|---|
| | | Maize (3-4 leaves) | |
| 63 | 0 | 0 | |
| 125 | 0 | 0 | |
| 250 | 0 | 0 | |
| 500 | 0 | 4 | |
| 1000 | 0 | 50 | |
| 2000 | 0 | 51 | |
| | | $ED_{20}$(g/ha) 797 | |
| 0 | 35 | 0 | |
| 0 | 70 | 0 | |
| 0 | 140 | 0 | |
| 0 | 280 | 1 | |
| | | $ED_{20}$(g/ha) >280 | |
| 31 | 35 | 0 | - |
| 63 | 35 | 1 | (0) |
| 125 | 35 | 1 | (0) |
| 250 | 35 | 2 | (0) |
| 500 | 35 | 12 | (4) |
| 1000 | 35 | 21 | (50) |
| | | $ED_{20}$(g/ha) 932 | NA |
| 31 | 70 | 0 | - |
| 63 | 70 | 0 | (0) |
| 125 | 70 | 0 | (0) |
| 250 | 70 | 3 | (0) |
| 500 | 70 | 9 | (4) |
| 1000 | 70 | 34 | (50) |
| | | $ED_{20}$(g/ha) 707 | NA |
| 31 | 140 | 0 | - |
| 63 | 140 | 0 | (0) |
| 125 | 140 | 1 | (0) |
| 250 | 140 | 11 | (0) |
| 500 | 140 | 11 | (4) |
| 1000 | 140 | 30 | (50) |
| | | $ED_{20}$(g/ha) 618 | NA |
| 31 | 280 | 0 | - |
| 63 | 280 | 2 | (0) |
| 125 | 280 | 2 | (0) |
| 250 | 280 | 12 | (0) |
| 500 | 280 | 10 | (4) |
| 1000 | 280 | 25 | (50) |
| | | $ED_{20}$(g/ha) 703 | NA |

( ) Expected value by Limpel; - Not calculated;

NA Not applicable.

According to a further feature of the present invention, there is provided a product comprising (a) bromoxynil or an agriculturally acceptable salt or ester thereof, preferably a metal or amine salt or an ester thereof with an alkanoic acid containing from 2 to 10 carbon atoms and (b) a 3-benzoylpiperidine-2,4-dione derivative of general formula I or a salt thereof with an agriculturally acceptable base as a combined

preparation for simultaneous, separate or sequential use in controlling the growth of weeds at a maize, wheat or barley crop locus.

According to a further feature of the present invention, there are provided herbicidal compositions comprising (a) bromoxynil or an agriculturally acceptable salt or ester thereof, preferably a metal or amine salt or an ester thereof with an alkanoic acid containing from 2 to 10 carbon atoms and (b) a 3-benzoylpiperidine-2,4-dione derivative of general formula I or a salt thereof with an agriculturally acceptable base for example in proportions of 14:1 to 1:3.3 preferably 6:1 to 1:1.3 wt/wt of acid equivalent (a) to acid equivalent (b) in association with, and preferably homogeneously dispersed in, one or more herbicidally-acceptable diluents or carriers and/or surface-active agents (i.e. diluents or carriers or surface-active agents of the type generally accepted in the art as being suitable for use in herbicidal compositions and which are compatible with bromoxynil and 3-benzoylpiperidine-2,4-dione derivatives). The term "homogeneously dispersed" is used to include compositions in which bromoxynil and 3-benzoylpiperidine-2,4-dione derivatives are dissolved in the other components. The term "herbicidal compositions" is used in a broad sense to include not only compositions which are ready for use as herbicides but also concentrates which must be diluted before use. Preferably, the compositions contain from 0.05 to 90% by weight of bromoxynil and 3-benzoylpiperidine-2,4-dione derivative(s).

The herbicidal compositions may contain both a diluent or carrier and a surface-active (e.g. wetting, dispersing, or emulsifying) agent. Surface-active agents which may be present in herbicidal compositions of the present invention may be of the ionic or non-ionic types, for example sulphoricinoleates, products based on condensates of ethylene oxide with nonyl- or octyl-phenols, or carboxylic acid esters or anhydrosorbitols which have been rendered soluble by etherification of the free hydroxy groups by condensation with ethylene oxide, alkali and alkaline earth metal salts or sulphuric acid esters and sulphonic acids such as dinonyl- and dioctyl-sodium sulphono-succinates and alkali and alkaline earth metal salts of high molecular weight sulphonic acid derivatives such as sodium and calcium lignosulphonates. Examples of suitable solid diluents or carriers are aluminium silicate, talc, calcined magnesia, kieselguhr, tricalcium phosphate, powdered cork, adsorbent carbon black and clays such as kaolin and bentonite. The solid compositions (which may take the form of dusts, granules or wettable powders) are preferably prepared by grinding bromoxynil and the 3-benzoylpiperidine-2,4-dione derivative with solid diluents or by impregnating the solid diluents or carriers with solutions of bromoxynil and the 3-benzoyl piperidine-2,4-dione derivative in volatile solvents, evaporating the solvents and, if necessary, grinding the products so as to obtain powders. Granular formulations may be prepared by absorbing bromoxynil and the 3-benzoylpiperidine-2,4-dione derivative (dissolved in volatile solvents) onto the solid diluents or carriers in granular form and evaporating the solvents, or by granulating compositions in powder form obtained as described above. Solid herbicidal compositions, particularly wettable powders, may contain wetting or dispersing agents (for example of the types described above) which may also, when solid, serve as diluents or carriers.

Liquid compositions according to the invention may take the form of aqueous, organic or aqueous-organic solutions, suspensions and emulsions which may incorporate a surface-active agent. Suitable liquid diluents for incorporation in the liquid compositions include water, acetophenone, cyclohexanone, isophorone, toluene, xylene and mineral, animal and vegetable oils (and mixtures of these diluents). Surface-active agents, which may be present in the liquid compositions, may be ionic or non-ionic (for example of the types described above) and may, when liquid, also serve as diluents or carriers.

Wettable powders and liquid compositions in the form of concentrates may be diluted with water or other suitable diluents, for example mineral or vegetable oils, particularly in the case of liquid concentrates in which the diluent or carrier is an oil, to give compositions ready for use. When desired, liquid compositions of bromoxynil and 3-benzoylpiperidine-2,4-dione derivative may be used in the form of self-emulsifying concentrates containing the active substances dissolved in the emulsifying agents or in solvents containing emulsifying agents compatible with the active substances, the simple addition of water to such concentrates producing compositions ready for use.

Liquid concentrates in which the diluent or carrier is an oil may be used without further dilution using the electrostatic spray technique.

Herbicidal compositions according to the presnt invention may also contain, if desired, conventional adjuvants such as adhesives, protective colloids, thickeners, penetrating agents, stabilisers, sequestering agents, anti-caking agents, colouring agents and corrosion inhibitors. These adjuvants may also serve as carriers or diluents.

Preferred herbicidal compositions according to the present invention are aqueous suspension concentrates which comprise from 10 to 70% w/v of bromoxynil and 3-benzoylpiperidine-2,4-dione derivative, from 2 to 10% w/v of surface-active agent, from 0.1 to 5% w/v of thickener and from 15 to 87.9% by volume of water; wettable powders which comprise from 10 to 90% w/w of bromoxynil and 3-benzoylpiperidine-2,4-dione derivative, from 2 to 10% w/w of surface-active agent and from 8 to 88% w/w of solid diluent or carrier; liquid water soluble concentrates which comprise from 10 to 30% w/v of bromoxynil and 3-benzoylpiperidine-2,4-dione derivative, from 5 to 25% w/v of surface-active agent and from 45 to 85% by volume of water-miscible solvent, e.g. dimethylformamide; liquid emulsifiable suspension concentrates which comprise from 10 to 70% w/v of bromoxynil and 3-benzoylpiperidine-2,4-dione derivative, from 5 to 15% w/v of surface-active agent, from 0.1 to 5% w/v of thickener and from 10 to 84.9% by volume of organic solvent; granules which comprise from 2 to 10% w/w of bromoxynil and 3-benzoylpiperidine-2,4-dione derivative, from

0.5 to 2% of w/w of surface-active agent and from 88 to 97.5% w/w of granular carrier and emulsifiable concentrates which comprise from 0.05 to 90% w/v, and preferably from 1 to 60% w/v, of bromoxynil and 3-benzoylpiperidine-2,4-dione derivative, from 0.01 to 10% w/v, and preferably from 1 to 10% w/v, of surface-active agent and from 9.99 to 99.94%, and preferably from 39 to 98.99%, by volume or organic solvent.

Herbicidal compositions according to the present invention may also comprise bromoxynil and 3-benzoyl-piperidine-2,4-dione derivative in association with, and preferably homogeneously dispersed in, one or more other pesticidally active compounds and, if desired, one or more compatible pestically acceptable diluents or carriers, surface-active agents and conventional adjuvants as hereinbefore described. Examples of other pesticidally active compounds which may be included in, or used in conjunction with, the herbicidal compositions of the present invention include herbicides, for example to increase the range of weed species controlled, for example, alachlor (2-chloro-2,6-diethyl-N-methoxymethylacetanilide), bentazone (3-isopropyl-1H-2,1,3-benzothiadiazin-4(3H)-one 2,2-dioxide), cyanazine (2-chloro-4-(1-cyano-1-methylethylamino)-6-ethylamino-1,3,5-triazine), 2,4-D ((2,4-dichlorophenoxy)acetic acid), MCPA [4-chloro-2-methylphenoxyacetic acid] and CMPP (also known as mecoprop) [(±)-2-(4-chloro-2-methylphenoxy)propionic acid]; insecticides for example carbamates (e.g. carbofuran), organo-phosphates (e.g. chlorpyrifos), synthetic pyrethroids (e.g. cypermethrin), acyl ureas (e.g. teflubenzuron) and Bacillus thuringiensis; and fungicides for example metalaxyl, carboxin and captafol. Other biologically active materials which may be included in, or used in conjunction with, the herbicidal compositions of the present invention are plant growth regulators and fertilizers containing, for example, nitrogen, potassium and phosphorus and trace elements known to be essential to successful plant life, e.g. iron, magnesium, zinc, manganese, cobalt and copper.

Pestically active compounds and other biologically active materials which may be included in, or used in conjunction with, the herbicidal compositions of the present invention, for example these hereinbefore mentioned, and which are acids, may, if desired, be utilized and in the form of conventional derivatives, for example alkali metal and amine salts and esters.

The compositions of the invention may be made up as an article of manufacture comprising bromoxynil and 3-benzoylpiperidine-2,4-dione derivative and optionally other biologically active compounds as hereinbefore described or, as is preferred, a herbicidal composition as hereinbefore described, and preferably a herbicidal concentrate which must be diluted before use, comprising bromoxynil and 3-benzoylpiperidine-2,4-dione derivative within a container for the aforesaid atrazine and 3-benzoylpiperidine-2, 4-dione derivative or a said herbicidal composition, and instructions physically associated with the aforesaid container setting out the manner in which the aforesaid bromoxynil and 3-benzoylpiperidine-2,4-dione derivative or herbicidal composition contained therein is to be used to control the growth of weeds. The containers will normally be of the types conventionally used for the storage of chemical substances which are solids at normal ambient temperatures and herbicidal compositions, particularly in the form of concentrates, for example cans and drums of metal, which may be internally-laquered, and plastics materials, bottles of glass and plastics materials and, when the contents of the container is a solid, for example granular herbicidal compositions, boxes, for example of cardboard, plastics materials and metal, or sacks. The containers will normally be of sufficient capacity to contain amounts of the active ingredients or herbicidal compositions sufficient to treat at least 0.5 hectares of ground to control the growth of weeds therein but will not exceed a size which is convenient for conventional methods of handling. The instructions will by physically associated with the container, for example by being printed directly thereon or on a label or tag affixed thereto. The directions will normally indicate that the contents of the container, after dilution if necesary, are to be applied to control the growth of weeds at rates of application between 2 and 350g a.e. of bromoxynil and between 0.5 and 500g a.e. of 3-benzoylpiperidine-2,4-dione derivative per hectare in the manner and for the purposes hereinbefore described.

The following Examples illustrate herbicidal compositions according to the present invention and herbicidal compositions suitable for use in the method for controlling the growth of weeds according to the present invention.

EXAMPLE 1

A water soluble powder was made from Compound 1 64% w/w

| | |
|---|---|
| Sodium carbonate | 20% w/w |
| Sodium dodecylbenzenesulphonate | 8% w/w |
| Sodium polymetaphosphate | 4% w/w |
| Precipiated silica | 4% w/w |

by mixing all the ingredients together and milling in a hammer mill.

EXAMPLE 2

A water soluble powder was made from Compound 74 60% w/w

| | |
|---|---|
| Sodium carbonate | 25% w/w |
| Atlox 4901 | 3.75% w/w |
| Sodium metaphosphate | 4% w/w |
| Precipitated silica | 7.25% w/w |

by using all the ingredients together and milling in a hammer mill.

Example 3

A water soluble powder was made from

| | |
|---|---|
| Compound 1 | 60% w/w |
| Sodium carbonate | 26% w/w |
| Atlox 4901 | 3.75% w/w |
| Sodium polymetaphosphate | 4% w/w |
| Precipitated silica | 6.25% w/w |

By mixing all the ingredients together and milling in a hammer mill.

Example 4

A water soluble powder was made from

| | |
|---|---|
| Compound 99 | 60% w/w |
| Sodium carbonate | 23% w/w |
| Atlox 4901 | 3.75% w/w |
| Sodium polymetaphosphate | 4% w/w |
| Precipitated silica | 9.25% w/w |

By mixing all the ingredients together and milling in a hammer mill.

Example 5

A water soluble powder was made from

| | |
|---|---|
| Compound 110 | 60% w/w |
| Sodium carbonate | 24% w/w |
| Atlox 4901 | 3.75% w/w |
| Sodium polymetaphosphate | 4% w/w |
| Precipitated silica | 8.25% w/w |

By mixing all the ingredients together and milling in a hammer mill.

Example 6

A water soluble powder was made from

| | |
|---|---|
| Compound 126 | 60% w/w |
| Sodium carbonate | 21.2% w/w |
| Atlox 4901 | 3.75% w/w |
| Sodium polymetaphospate | 4% w/w |
| Precipitated silica | 11.05% w/w |

By mixing all the ingredients together and milling in a hammer mill.

EXAMPLE 7

A 14:1 mixture was formed by tank mixing 1.6 litres of a commercially available emulsifiable concentrate formulation containing 225g/l bromoxynil phenol equivalent as the octanoate ester with 42g of the composition of Example 2 in a volume of 200 litres of 0.2% v/v nonylphenol ethylene oxide condensate solution in water. The resulting spray fluid was applied to one hectare of maize to control Amaranthus retroflexus, Chenopodium album, Solanum nigrum and Xanthium pennsylvanicum.

EXAMPLE 8

A 1:3.33 mixture was formed by tank mixing 667ml of a commercially available aqueous suspension concentrate formulation containing 225g/l w/v bromoxynil phenol equivalent as the octanoate ester with 833g of the composition of Example 2 in a volume of 200 litres 0.2% v/v nonylphenol ethylene oxide condensate solution in water. The resulting spray fluid was applied to one hectare of maize to control Bidens pilosa, Eleusine indica, Echinochloa crus-galli and Digitaria sanguinalis.

In the mixed formulations in the Examples hereinbefore, the 3-benzoylpiperidine-2,4-dione derivative may be replaced by other 3-benzoylpiperidine-2,4-dione derivatives of general formula I.

The following Examples and Reference Examples illustrate the preparation of compounds of general formula I.

EXAMPLE 9

Compound 1

A solution of 4-chloro-2-nitrobenzoyl chloride (4.4g) in dry dichloromethane (5ml) was added at 5-10°C to a stirred solution of 6,6-dimethylpiperidine-2,4-dione (2.8g) and triethylamine (2.8ml) in dry dichloromethane (50ml) and the mixture was stirred at ambient temperature for 18 hours. Triethylamine (8.4ml) and acetone cyanohydrin (0.4ml) were added successively to the solution and the mixture was stirred at ambient temperature for 4 hours. The resulting solution was washed successively with 2N hydrochloric acid (25ml) and water (3x25ml), dried over sodium sulphate and evaporated under reduced pressure to give a yellow solid which is recrystallised from acetonitrile to give 3-(4-chloro-2-nitrobenzoyl)-6,6-dimethylpiperidine-2,4-dione (4g), mp 162-162.5°C, as a yellow crystalline solid.

## EXAMPLE 10

Compound 6

A solution of 4-chloro-2-nitrobenzoyl chloride (5.8g) in dry dichloromethane (10ml) was added over 5 minutes to a stirred solution of piperidine-2,4-dione (3.0g) and triethylamine (5.5ml) in dry dichloromethane (100ml) and the mixture was stirred at ambient temperature for 3 hours. Acetone cyanohydrin (0.5ml) was added and the mixture was stirred at ambient temperature for 18 hours. The solution was washed successively with 2N hydrochloric acid (50ml) and water (2x100ml), dried over sodium sulphate and evaporated under reduced pressure to give a solid residue which was recrystallised from ethyl acetate (70ml) to give 3-(4-chloro-2-nitrobenzoyl)piperidine-2,4-dione (1.6g), mp 161-164°C, as a light brown crystalline solid.

Piperidine-2,4-dione is a known compound [S.Toda et al, J. Antibiotics XXXIII, 173 (1980)].

## EXAMPLE 11

Compounds 74, 99, 103, 110, 126 and 135

By proceeding in a similar manner to that hereinbefore described in Example 6 there were prepared the compounds of general formula I defined in Table I

TABLE I

| Compound | $R^1$ | $R^2$ | $R^3$ | $R^4$ | mp°C |
|---|---|---|---|---|---|
| 74 | H | H | 2-$NO_2$-4-$CF_3$ | | 154-156 |
| 99 | $CH_3$ | $CH_3$ | 2-$NO_2$-4-$CF_3$ | | 147-150 |
| 103 | $CH_3$ | $CH_3$ | 2-$NO_2$-4-$SO_2CH_3$ | | 168-170 |
| 110 | H | H | 2-$NO_2$-4-$SO_2CH_3$ | | 157-158 |
| 126 | H | H | 2-Cl-4-$SO_2CH_3$ | | 187-188 |
| 135 | $CH_3$ | $CH_3$ | 2-Cl-4-$SO_2CH_3$ | | 216 |

## REFERENCE EXAMPLE 1

A mixture of methyl 6,6-dimethylpiperidine-2,4-dione-3-carboxylate (26.3g), water (30ml) and concentrated hydrochloric acid (3 drops) in acetonitrile (300ml) was heated at reflux for 4 hours. The cooled solution was evaporated under reduced pressure and the residue recrystallised from water (50ml) to give 6,6-dimethylpiperidine-2,4-dione (7.3g), mp 183-184°C, as a cream crystalline solid.

## REFERENCE EXAMPLE 2

A solution of methyl 3-(ethoxycarbonylacetamido)-3-methylbutyrate (45g) and sodium metal (4.22g) in anhydrous methanol (450ml) was heated at a reflux for 3 hours. The cooled mixture was evaporated under reduced pressure and the residue dissolved in water (200ml). The aqueous solution was washed with ether (3x100ml), acidified with 2N hydrochloric acid and the acidic mixture extracted with dichloromethane (3x100ml). The combined extracts were washed with water (2x100ml), dried over magnesium sulphate and evaporated under reduced pressure to give methyl 6,6-dimethylpiperidine-2,4-dione-3-carboxylate (26.3g), mp 170-172°C, as a cream crystalline solid.

## REFERENCE EXAMPLE 3

A solution of ethyl malonoyl chloride (31g) in dry dichloromethane (50ml) was added at 0-5°C to a well stirred mixture of methyl 3-aminoisovalerate hydrochloride (33.5g) and dry triethylamine (58.5ml) in dry dichloromethane (300ml) and the mixture stirred at ambient temperature for 18 hours. The mixture was washed successively with 2N hydrochloric acid (50ml), water (50ml), 2N sodium carbonate (25ml) and water (3x50ml) dried over magnesium sulphate and evaporated under reduced pressure to give methyl 3-(ethoxycarbonylacetamido)-3-methylbutyrate (45g), as a clear orange oil.

I

## Claims

1. A method for the control of the growth of weeds at a maize, wheat or barley crop locus which comprises the post-emergence application to the locus of (a) bromoxynil, which is 3,5-dibromo-4-hydroxybenzonitrile, or an agriculturally acceptable salt or ester thereof, and (b) a 3-benzoylpiperidine-2,4-dione derivative of formula (I):

wherein $R^1$ and $R^2$ both represent hydrogen atoms or both represent methyl groups, $R^3$ represents the nitro group and $R^4$ represents the chlorine atom or the trifluoromethyl group, or $R^3$ represents the chlorine atom or the nitro group and $R^4$ represents the methylsulphonyl group, or a salt thereof with an agriculturally acceptable base.

2. A method according to claim 1, in which the application rate of (a) is from 2 to 350 g acid equivalents/ha and the application rate of (b) is from 0.5 to 500 g acid equivalents/ha.

3. A method according to claim 2, in which the application rate of (a) is from 150 to 350 g acid equivalents/ha, and the application rate of (b) is from 25 to 500 g acid equivalents/ha.

. A method according to claim 3, in which the application rate of (a) is from 200 to 300 g acid equivalents/ha and the application rate of (b) is from 50 to 250 g acid equivalents/ha.

5. A method according to any one of the preceding claims in which (a) comprises a metal or amine salt of bromoxynil or an ester thereof with an alkanoic acid containing from 2 to 10 carbon atoms.

6. A method according to claim 5 in which (a) comprises bromoxynil octanoate.

7. A method according to any one of claims 1 to 4 in which (a) comprises bromoxynil.

8. A product comprising (a) bromoxynil, which is 3,5-dibromo-4-hydroxybenzonitrile, or an agriculturally acceptable salt or ester thereof, and (b) a 3-benzoylpiperidine-2,4-dione derivative of formula I as defined in claim 1, or a salt thereof with an agriculturally acceptable base, as a combined preparation for simultaneous, separate or sequential use in controlling the growth of weeds at a maize, wheat or barley crop locus.

9. A herbicidal composition comprising (a) bromoxynil, which is 3,5-dibromo-4-hydroxybenzonitrile, or an agriculturally acceptable salt or ester thereof, and (b) a 3-benzoylpiperidine-2,4-dione derivative of formula I as defined in claim 1 or a salt thereof with an agriculturally acceptable base, in association with a herbicidally acceptable diluent or carrier and/ir surface-active agent.

10. A composition according to claim 9 in which the weight ratio of acid equivalent of (a) to acid equivalent of (b) is from 14:1 to 1:3.3.

11. A composition according to claim 10 in which the weight ratio of acid equivalent of (a) to acid equivalent of (b) is from 6:1 to 1:1.3.

12. A composition according to claim 9,10 or 11 in which (a) comprises a metal or amine salt of bromoxynil, or an ester thereof with an alkanoic acid containing from 2 to 10 carbon atoms.

13. A composition according to claim 12 in which (a) comprises bromoxynil octanoate.

14. A composition according to claim 9, 10 or 11 in which (a) comprises bromoxynil.

FIGURE 1

Echinochloa crus-galli : Isobole ED 90
Compound 74 (g/ha)
Bromoxynil g a. e./ha
0
20
40
60
80
100
0
50
100
150

FIGURE 2

Compound 1 in mixtures with bromoxynil
Abutilon theophrasti. Isobole: ED 50%
Observed
Additive
Bromoxynil (g/ha)
120
100
80
60
40
20
0
0
5
10
15
20
25
Compound 1 (g/ha)

FIGURE 3

Compound 1 in mixtures with bromoxynil
Amaranthus retroflexus. Isobole: ED 90%
Observed
Additive
Bromoxynil (g/ha)
125
100
75
50
25
0
0
5
10
15
20
25
Compound 1 (g/ha)

FIGURE 4

Compound 1 in mixtures with bromoxynil
Brassica kaber. Isobole: ED 90%
Observed
Additive
Bromoxynil (g/ha)
80
60
40
20
0
0
10
20
30
40
50
60
Compound 1 (g/ha)

FIGURE 5

Compound 1 in mixtures with bromoxynil.
Digitaria sanguinalis. Isobole: ED 50%
Bromoxynil (g/ha)
Observed
Additive
300
250
200
150
100
50
0
0
5
10
15
20
25
Compound 1 (g/ha)

FIGURE 6

Compound 1 in mixtures with bromoxynil.
Eleusine indica. Isobole: ED 90%
Observed
Additive
Bromoxynil (g/ha)
300
250
200
150
100
50
0
Compound 1 (g/ha)
0
10
20
30
40
50
60
70

FIGURE 7

Compound 74 in mixtures with bromoxynil.
Digitaria sanguinalis. Isobole: ED 90 %
Bromoxynil (g/ha)
Observed
Additive
300
250
200
150
100
50
0
Compound 74 (g/ha)
0
50
100
150
200

FIGURE 8

Compound 74 in mixtures with bromoxynil.
Echinochloa crus-galli. Isobole: ED 90 %
Observed
Additive
Bromoxynil (g/ha)
300
250
200
150
100
50
0
0
50
100
150
200
Compound 74 (g/ha)

FIGURE 9

Compound 74 in mixtures with bromoxynil.
Eleusine indica. Isobole: ED 90 %
Observed
Additive
Bromoxynil (g/ha)
Compound 74 (g/ha)
0
50
100
150
200
250
300

FIGURE 10

Compound 74 in mixtures with bromoxynil.
Chenopodium album. Isobole: ED 90 %
Observed
Additive
Bromoxynil (g/ha)
80
60
40
20
0
0
1
2
3
4
Compound 74 (g/ha)

FIGURE 11

Compound 74 in mixtures with bromoxynil.
Solanum nigrum. Isobole: ED 90 %
Observed
Additive
Bromoxynil (g/ha)
25
20
15
10
5
0
Compound 74 (g/ha)
0
5
10
15
20
25

FIGURE 12

Compound 74 in mixtures with bromoxynil.
Abutilon theophrasti. Isobole: ED 90%
Observed
Additive
Bromoxynil (g/ha)
150
120
90
60
30
0
Compound 74 (g/ha)
0
30
60
90
120
150

FIGURE 13

Compound 74 in mixtures with bromoxynil.
Amaranthus retroflexus. Isobole: ED 90%
-□- Observed - Additive
Bromoxynil (g/ha)
150
120
90
60
30
0
0
5
10
15
20
25
Compound 74 (g/ha)

FIGURE 14

Compound 99 in mixtures with bromoxynil.
Abutilon theophrasti. Isobole: ED 90%
Bromoxynil (g/ha)
Observed
Additive
150
100
50
0
0
5
10
15
20
25
Compound 99 (g/ha)

FIGURE 15

Compound 99 in mixtures with bromoxynil.
Amaranthus retroflexus. Isobole: ED 90%
-□- Observed
-- Additive
Bromoxynil (g/ha)
150
100
50
0
0
5
10
15
20
Compound 99 (g/ha)

FIGURE 16

Compound 99 in mixtures with bromoxynil.
Brassica kaber. Isobole: ED 90%
Observed
Additive
Bromoxynil (g/ha)
Compound 99 (g/ha)
50
40
30
20
10
0
0
10
20
30
40
50
60

FIGURE 17

Compound 110 in mixtures with bromoxynil.
Abutilon theophrasti. Isobole: ED 50%
Bromoxynil (g/ha)
-□- Observed
- Additive
80
60
40
20
0
0
5
10
15
20
25
Compound 110 (g/ha)

FIGURE 18

Compound 110 in mixtures with bromoxynil.
Amaranthus retroflexus. Isobole: ED 90%
Bromoxynil (g/ha)
Observed
Additive
250
200
150
100
50
0
5
10
15
Compound 110 (g/ha)

FIGURE 19

Compound 110 in mixtures with bromoxynil.
Brassica kaber. Isobole: ED 90%
Observed
Additive
Bromoxynil (g/ha)
80
60
40
20
0
0
5
10
15
Compound 110 (g/ha)

FIGURE 20

Compound 126 in mixtures with bromoxynil.
Abutilon theophrasti. Isobole: ED 90%
Bromoxynil (g/ha)
Observed
Additive
150
100
50
0
0
5
10
15
20
25
Compound 126 (g/ha)

FIGURE 21

Compound 126 in mixtures with bromoxynil.
Amaranthus retroflexus. Isobole: ED 90%
Bromoxynil (g/ha)
Observed
Additive
250
200
150
100
50
0
0
2
4
6
8
Compound 126 (g/ha)

FIGURE 22

Compound 126 in mixtures with bromoxynil.
Brassica kaber. Isobole; ED 90%
Bromoxynil (g/ha)
Observed
Additive
125
100
75
50
25
0
0
20
40
60
80
100
Compound 126 (g/ha)

FIGURE 23

Compound 74 mixtures with bromoxynil.
Maize var. Irla. Isobole: ED 20%
Bromoxynil (g/ha)
Observed
Additive
300
250
200
150
100
50
0
0
400
800
1200
1600
2000
Compound 74 (g/ha)

FIGURE 24

Compound 99 in mixtures with bromoxynil.
Maize var. Irla. Isobole: ED 20%
Bromoxynil (g/ha)
-□- Observed - Additive
0
50
100
150
200
250
300
0
200
400
600
800
1000
Compound 99 (g/ha)